(19) Europäisches Patentamt
European Patent Office
Office européen des brevets

(11) EP 2 209 119 B1

(12) **EUROPEAN PATENT SPECIFICATION**

(45) Date of publication and mention of the grant of the patent:
**12.12.2012 Bulletin 2012/50**

(51) Int Cl.:
***G11B 7/245*** *(2006.01)* ***G11B 7/253*** *(2006.01)*

(21) Application number: **10250037.8**

(22) Date of filing: **11.01.2010**

(54) **Optical information recording medium**

Optisches Informationsaufzeichnungsmedium

Support d'enregistrement d'informations optiques

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.01.2009 JP 2009009219**

(43) Date of publication of application:
**21.07.2010 Bulletin 2010/29**

(73) Proprietor: **Sony Corporation**
**Tokyo 108-0075 (JP)**

(72) Inventors:
- **Oyamada, Misuaki**
  **Tokyo 108-0075 (JP)**
- **Iwamura, Takashi**
  **Tokyo 108-0075 (JP)**
- **Ueda, Daisuke**
  **Tokyo 108-0075 (JP)**
- **Endo, Takehide**
  **Tokyo 108-0075 (JP)**

(74) Representative: **Jackson, Jonathan Andrew et al**
**D Young & Co LLP**
**120 Holborn**
**London EC1N 2DY (GB)**

(56) References cited:
**WO-A1-02/093579 JP-A- 2006 190 347**

EP 2 209 119 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an optical information recording medium.

Heretofore, disc-shaped optical disc bodies have been widely prevalent as optical information recording media. In general, a Compact Disc (CD), a Digital Versatile Disc (DVD), a Blu-ray Disc (registered trademark: hereinafter referred to as "a BD" for short), and the like have been used.

On the other hand, in an optical information recording/reproducing apparatus corresponding to an optical information recording medium, various kinds of information such as various kinds of contents such as music contents or image contents, or various kinds of data for a computer are recorded in this sort of optical recording medium. In particular, in recent years, an amount of information has increased due to the increased high definition of an image, the increased high-quality of music, and the like. In addition, it has been required to increase the number of contents recorded in one sheet of optical information recording medium. For this reason, it has been required to further increase the capacity of the optical information recording medium.

In order to cope with such a situation, an optical information recording medium in which information is three-dimensionally recorded in a direction of a thickness thereof is proposed as one of techniques for realizing the increased large capacity of the optical information recording medium. Some of such optical information recording media is such that a two-photon absorption material which is adapted to foam due to two-photon absorption is contained in a recording layer in advance, and a light beam is radiated to the two-photon absorption material, thereby forming a recording mark formed of bubbles. This optical information recording medium, for example, is described in Japanese Patent Laid-Open No. 2005-37658 (hereinafter referred to as Patent Document 1).

The two-photon absorption is a kind of three-dimensional nonlinear optical phenomenon, and is a phenomenon that one molecule simultaneously absorbs two photons through respective virtual levels to be an excited state. Thus, the two-photon absorption is proportional to a square of an electric field intensity (that is, a light intensity).

For this reason, in the optical information recording medium containing therein the two-photon absorption material (hereinafter referred to as "the two-photon absorption recording medium" for short), the two-photon absorption occurs only in the vicinity of a focal point having the largest electric field intensity, whereas no two-photon absorption occurs in any of portions, each having a small electric field intensity, other than the focal point. That is to say, a laser beam travels within a recording layer with little absorption until it reaches the focal point, and is absorbed due to occurrence of the two-photon absorption at a time point when the laser beam reaches the focal point.

Here, in the case of a general recording layer in which one photon is absorbed, since the laser beam is absorbed in the entire region of the recording layer, the light intensity of the laser beam is reduced until the laser beam reaches a deep portion of the recording medium. For this reason, in the general recording layers in which one photon is absorbed, it was difficult to structure the recording layer so as to have 10 layers or more for example.

On the other hand, the two-photon absorption recording medium has such an advantage that since the laser beam is hardly absorbed in the recording layer until it reaches the focal point, it is possible to structure the recording layer so as to have 10 layers or more.

Now then, in the two-photon absorption recording medium having such a structure, it is desirable to improve the recording characteristics when the recording mark is formed.

WO 02/093579 discloses a method of storage of non-erasable optical data comprising exposing data storage material of a three-dimensional optical data storage device to focused electromagnetic radiation wherein the radiation is of a wavelength and power appropriate to generate micro-cavity formation within the data storage material and wherein the location of micro-cavities encodes for stored data; the data storage material comprising a polymer matrix and a photosensitive agent dispersed through the polymer matrix.

The present invention has been made in order to solve the problem described above, and it is therefore desirable to provide an optical information recording medium which is capable of improving recording characteristics.

In order to attain the desire described above, according to an embodiment of the present invention, there is provided an optical information recording medium including a recording layer in which a recording mark formed of a cavity is formed in accordance with a light for recording, which contains therein a compound having a skeleton expressed by the general formula (1):

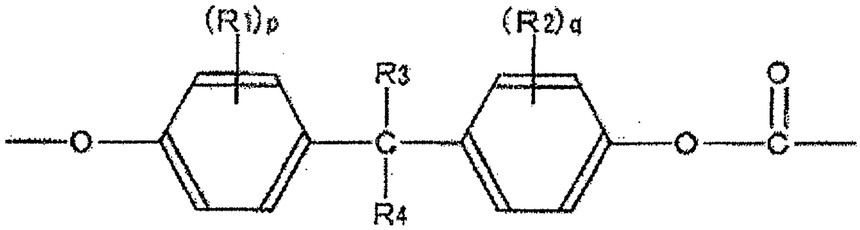

... (1)

where $R_1$, $R_2$, $R_3$, and $R_4$ are either hydrogen atoms or substituents.

As a result, in the optical information recording medium according to the embodiment of the present invention, a size of the recording mark can be made small. Thus, it is possible to prevent interference between the recording marks in a phase of a reproducing operation.

Also disclosed herein is an optical information recording medium including a recording layer in which a recording mark formed of a cavity is formed in accordance with a light for recording, and a recording time for which a recording mark is formed at the shortest time is shortened inversely proportional to a light intensity to the M-th power ($M \geq 2.9$).

As a result, in the optical information recording medium, a size of the recording mark can be made small. Thus, it is possible to prevent interference between the recording marks in a phase of a reproducing operation.

Also disclosed herein is an optical information recording medium including a recording layer in which a recording mark formed of a cavity is formed in accordance with a light for recording, and which contains therein a multiple-photon absorption material adapted to cause a multiple-photon absorption reaction as a primary constituent.

As a result, in the optical information recording medium, a size of the recording mark can be made small. Thus, it is possible to prevent interference between the recording marks in a phase of a reproducing operation.

According to yet another embodiment of the present invention, there is provided an optical information recording medium including a recording layer in which a recording mark formed of a cavity is formed in accordance with a light for recording, and which contains therein either a polymer or a copolymer of bisphenol-A having a skeleton expressed by the general formula (2):

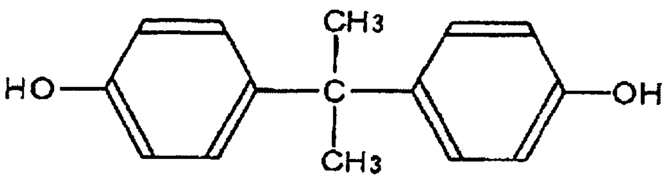

... (2)

As a result, in the optical information recording medium according to the yet another embodiment of the present invention, a size of the recording mark can be made small. Thus, it is possible to prevent interference between the recording marks in a phase of a reproducing operation.

As set forth hereinabove, according to the present invention, in the optical information recording medium, the size of the recording mark can be made small. Thus, it is possible to prevent the interference between the recording marks in the phase of the reproducing operation. As a result, it is possible to realize the optical information recording medium which is capable of improving the recording characteristics.

Preferably, the invention relates more particularly to an optical information recording medium in which, for example, information is recorded by using a light beam and from which the information is reproduced by using the light beam.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

FIG. 1 is a schematic perspective view showing an external appearance of an optical disc;

FIG. 2 is a schematic cross sectional view showing a structure of an optical disc according to an embodiment of the present invention;

FIG. 3 is a schematic cross sectional view used in explaining servo control for an information light beam;

FIGS. 4A and 4B are respectively schematic cross sectional views each used in explaining a relationship between a reference surface depth and a surface depth;

FIG. 5 is a schematic cross sectional view showing a structure of an optical disc according to a first change of the embodiment shown in FIG. 2;

FIG. 6 is a schematic cross sectional view showing a structure of an optical disc according to a second change of the embodiment shown in FIG. 2;

FIG. 7 is a schematic cross sectional view showing a structure of an optical disc according to a third change of the embodiment shown in FIG. 2;

FIG. 8 is a schematic cross sectional view showing a structure of an optical disc according to a fourth change of the embodiment shown in FIG. 2;

FIG. 9 is a schematic cross sectional view showing a structure of an optical disc according to a fifth change of the embodiment shown in FIG. 2;

FIG. 10 is a schematic cross sectional view showing a structure of an optical disc according to a sixth change of the embodiment shown in FIG. 2;

FIG. 11 is a schematic cross sectional view showing a structure of an optical disc according to a seventh change of the embodiment shown in FIG. 2;

FIG. 12 is a schematic cross sectional view showing a structure of an optical disc according to an eighth change of the embodiment shown in FIG. 2;

FIG. 13 is a schematic cross sectional view showing a structure of an optical disc according to a ninth change of the embodiment shown in FIG. 2;

FIG. 14 is a schematic cross sectional view showing a structure of an optical disc according to a tenth change of the embodiment shown in FIG. 2;

FIG. 15 is a schematic cross sectional view showing a structure of an optical disc according to an eleventh change of the embodiment shown in FIG. 2;

FIG. 16 is a schematic cross sectional view showing a structure of an optical disc according to a twelfth change of the embodiment shown in FIG. 2;

FIG. 17 is a schematic cross sectional view showing a structure of an optical disc according to a thirteenth change of the embodiment shown in FIG. 2;

FIG. 18 is a schematic cross sectional view showing a structure of an optical disc according to a fourteenth change of the embodiment shown in FIG. 2;

FIG. 19 is a schematic cross sectional view showing a structure of an optical disc according to a fifteenth change of the embodiment shown in FIG. 2;

FIG. 20 is a schematic cross sectional view showing a structure of an optical disc according to a sixteenth change of the embodiment shown in FIG. 2;

FIG. 21 is a schematic diagram showing a construction of an optical disc device;

FIG. 22 is a microscope photograph showing a recording mark of a sample S1;

FIG. 23 is a microscope photograph showing a recording mark of a sample S3;

FIG. 24 is a microscope photograph showing a recording mark of a comparative sample R3;

FIG. 25 is a graph showing a relationship between a peak power and exposure time in the sample S1;

FIG. 26 is a graph showing a relationship between an average emitted light intensity and exposure time in the sample S1;

FIG. 27 is a graph showing a relationship between a peak power and exposure time in the sample S3;

FIG. 28 is a graph showing a relationship between an average emitted light intensity and exposure time in the sample S3;

FIG. 29 is a graph showing a regenerative signal when a surface depth is set at 50 μm;

FIG. 30 is a graph showing a regenerative signal when the surface depth is set at 100 μm; and

FIG. 31 is a graph showing a regenerative signal when the surface depth is set at 150 μm.

It is noted that the description will now be given in accordance with the following order.

1. to 4. Embodiment, and Changes and Examples thereof (formation of recording mark RM)

5. Other Embodiments

<Embodiment>

[1. Structure of Optical Disc]

Firstly, a description will be given below with respect to the principles about recording and reproducing of information in and from an optical disc according to an embodiment of the present invention. In this embodiment, a recording mark RM formed of a cavity is formed in a recording layer 101 of an optical disc 100.

Actually, the optical disc 100 as an optical information recording medium, as shown in its external appearance in FIG. 1, is structured approximately so as to have a disc-like shape as a whole, and is provided with a hole portion 100H for chucking at the center thereof.

FIG. 2 shows an internal structure of an optical disc 100A having a basic structure in terms of the optical disc 100. The optical disc 100A, as shown in its cross sectional view in FIG. 2, has such a structure that one-side surface of a recording layer 101 for recording of information is covered with a cover layer 103. In addition, a reference layer 102 is provided between the recording layer 101 and the cover layer 103. Hereinafter, a description will be given with respect to the principles with respect to recording and reproducing of the recording mark RM in and from the optical disc 100 by using the structure of the optical disc 100A.

In the optical disc 100, a light beam is made incident from a first surface 100x composing a surface of the cover layer 103.

A guide groove for servo is formed in the reference layer 102. Specifically, a helical track (hereinafter referred to as "a servo track") TR is formed by the same groove and land as those of the general BD-Recordable (R) disc or the like. Widths of the groove and the land are selected in accordance with a wavelength of an information light beam LM for recording and reproducing of information.

For example, when the wavelength of the information light beam LM is 650 nm, it is possible to use the groove and land having the same widths as those in the Digital Versatile Disc (DVD)-R. In addition, when the wavelength of the information light beam LM is 405 nm, it is possible to use the groove and land having the same widths as those in the Blu-ray Disc (BD: registered trademark). As with the DVD-Random Access Memory (RAM), each of the widths of the groove and the land can also be set as the same width as that of a track pitch.

This servo track TS is given addresses of a series of numbers every predetermined recording unit. Thus, a servo track (hereinafter referred to as "a target servo track TSG") to which a light beam for servo (hereinafter referred to as "a servo light beam LS") is to be radiated can be specified by the address concerned.

It should be noted that pits or the like may be formed in the reference layer 102 (that is, a boundary surface between the recording layer 101 and the cover layer 103) instead of forming the guide groove, or a combination of the guide groove and the pits or the like may be formed in the reference layer 102. In addition, the track of the reference layer 102 may be formed in a concentric fashion instead of being formed in the helical fashion.

Both the information light beam LM and the servo light beam LS are radiated to the optical disc 100. The reference layer 102 is adapted to transmit the information light beam LM at a high transmittance, while it is adapted to reflect the servo light beam LS at a high reflectivity. A blue-violet light beam, for example, having a waveform of about 405 nm is used as the information light beam LM, and a red light beam, for example, having a wavelength of about 660 nm is used as the servo light beam LS.

When as shown in FIG. 3, the servo light beam LS is radiated to the optical disc 100 through an objective lens OL of an optical disc device, the servo light beam LS is reflected by the reference layer 102 to be emitted as a servo reflected light beam LSr from the cover layer 103 to the optical disc device.

The servo reflected light beam LSr thus emitted is received by the optical disc device. The optical disc device carries out position-controls, in a focusing direction, for allowing the objective lens OL to be close to or away from the optical disc 100 based on the light reception results, thereby focusing a focal point FS of the servo light beam LS on the reference layer 102.

When the information light beam LM is radiated to the optical disc 100 through the objective lens OL, the optical disc 100 causes the information light beam LM to be transmitted through the cover layer 103 and the reference layer 102, thereby radiating the information light beam LM to the recording layer 101.

At this time, in the optical disc device, optical axes of the servo light beam LS and the information light beam LM are made to approximately agree with each other. As a result, in the optical disc device, the focal point FM of the information light beam LM is made to be located in a portion corresponding to a target servo track TSG within the recording layer 101, that is, on a normal vertical to the reference layer 102 after passing through the target servo track TSG. Hereinafter, a track corresponding to the target servo track TSG in the target mark layer YG is referred to as "a

target track TG," and a position of the focal point FM is referred to as "a target position PG."

The recording layer 101 is made of a photoreactive resin which reacts to the blue-violet light beam having the wavelength of 405 nm. When an information light beam LM for recording having a relative strong intensity (hereinafter referred to as "a recording information light beam LMw") is radiated to the inside of the recording layer 101, bubbles, for example, are formed in the recording layer 101, thereby forming a recording mark RM in the position of the focal point FM. It is noted that details of the photoreactive resin will be described later.

In this connection, the optical disc device encodes information to be recorded into binary recording data consisting of a combination of codes "0" and "1." In addition, the optical disc device emission-controls the recording information light beam LMw in such a way that the recording mark RM, for example, is formed so as to correspond to the code "1" of the recording data, and the recording mark RM is not formed so as to correspond to the code "0" of the recording data.

Moreover, the optical disc device rotation-drives the optical disc 100, and modulates the intensity of the recording information light beam LMw while suitably controlling a movement of the objective lens OL in a radial direction.

As a result, helical tracks made by a plurality of recording marks RM are successively formed in the recording layer 101 of the optical disc 100 so as to correspond to the servo tracks TS provided in the reference layer 102, respectively.

In addition, the recording marks RM thus formed are disposed in a planar shape approximately parallel with each of the surfaces such as the first surface 100x and the reference layer 102 of the optical disc 100. As a result, a layer made by the recording marks RM (hereinafter referred to as "a mark layer Y") is formed.

Moreover, the optical disc device changes the position of the focal point FM in the recording information light beam LMw in a thickness direction of the optical disc 100, thereby making it possible to form a plurality of mark layers Y within the recording layer 101. For example, the optical disc device is adapted to successively form the mark layer Y every predetermined layer interval from the first surface 100x side of the optical disc 100.

On the other hand, when the information is reproduced from the optical disc 100, the optical disc device condenses an information light beam LM for reproduction (hereinafter referred to as "a reading information light beam LMi") having a relative weak light intensity, for example, from the first surface 100x side. Here, when the recording mark RM is formed in the position of the focal point FM (that is, the target position PG), the reading information light beam LMi concerned is reflected by the recording mark RM, so that the information reflected light beam LMr is emitted from the recording mark RM concerned.

The optical disc device generates a detection signal corresponding to a result of detection of the information reflected light beam LMr, and detects whether or not the recording mark RM is formed based on the detection signal.

At this time, the optical disc device, for example, allocates the information recorded to the code "1" when the recording mark RM is formed, and allocates the information recorded to the code "0" when the recording mark RM is not formed, thereby making it possible to reproduce the information recorded.

As has been described, in this embodiment, the information light beam LM is radiated to the target position PG while the optical disc device combines use of the information light beam LM and the servo light beam LS, whereby the information is recorded in the recording layer 101, or the information is reproduced from the recording layer 101.

It is noted that a concrete structure of the optical disc device is described in Japanese Patent Application No. 2007-168991.

Hereinafter, the concrete structure of the optical disc 100 will be described in detail.

As shown in FIG. 4A, when the reference layer 102 is provided on the incidence side of the recording layer 101, the optical disc 100 can cause a depth from the surface on the incidence side of the recording layer 101 (hereinafter referred to as "a surface depth f"), and a depth from the reference layer 102 (hereinafter referred to as "a reference depth d") to agree with each other on a constant basis.

For this reason, even when a thickness t1 of the recording layer 101 is lacking in uniformity, the optical disc 100 can cause a spherical aberration of the information light beam LM to be equal to the reference surface depth d on a constant basis. That is to say, when the optical disc device corrects the spherical aberration of the information light beam LM in correspondence to the reference surface depth d, the optical disc device can sufficiently focus a spot of the information light beam LM, thereby making the recording and reproducing characteristics satisfactory.

On the other hand, as shown in FIG. 4B, when the reference layer 102 is provided on a side opposite to the incidence side of the receiving layer 101 (that is, on a second surface 100y side), a value which is obtained by subtracting the reference surface depth d from the thickness t1 of the recording layer 101 becomes the surface depth f, and thus the surface depth f changes depending on the thickness t1 of the recording layer 101.

That is to say, in the case where the thickness t1 deviates from a specified value even when the optical disc device corrects the spherical aberration of the information light beam LM in correspondence to the reference surface depth d, the optical disc device cannot sufficiently focus the spot of the information light beam LM because the optical disc device cannot correct the spherical aberration of the information light beam LM, so that the recording and reproducing characteristics are deteriorated.

Therefore, as with the optical disc 100A shown in FIG. 2, the reference layer 102 is preferably provided in the interface between the recording layer 101 and the cover layer 103, that is, provided adjacent to the incidence side, of

the recording layer 101 (that is, on the first surface 100x side), to which both the servo light beam LS and the interface light beam LM are made incident.

In addition, a guide groove for focusing the focal point FM in the radial direction of the optical disc 100A (that is, for the tracking servo) is preferably provided in the reference layer 102 for focusing the focal point FM of the information light beam LM in the thickness direction of the recording layer 101 (that is, for the focus servo).

As a result, the reference layer 102 can be used for the focus servo as well as the tracking servo, and thus the number of layers in the reference layer 102 can be reduced. In addition, the optical disc device can also be simply constructed because the servo light beam LS for the focus servo as well as for the tracking servo can be used in a combined use style.

In addition, it is also possible that the recording layer 101 is divided into parts, and a reference layer 102 is provided between each adjacent two parts. However, the number of reference layers 102 is preferably either one or two because an increase in the number of layers in the reference layer 102 to be formed results in an increase in the manufacture cost.

The reference layer 102 is formed by providing a dielectric film in the guide groove for servo which, for example, is formed by using a stamper or the like. In this case, the dielectric film, for example, has a five layer structure of a silicon nitride/a silicon oxide/the silicon nitride/the silicon oxide/the silicon nitride. Also, a thickness of the silicon nitride is set at 80 nm, and a thickness of the silicon oxide is set at 110 nm. As a result, the dielectric film can reflect a light having a wavelength of about 650 nm, and can transmit a light having a wavelength of about 400 nm approximately at a rate of 100%.

It should be noted that the dielectric film can also be formed by suitably combining various kinds of materials, having different refractive indices, such as a tantalum oxide, a titanium oxide, a magnesium fluoride, and a zinc oxide in accordance with the wavelength of the servo light beam LS and the information light beam LM in addition to the silicon nitride and the silicon oxide.

The cover layer 103 is made of any of various kinds of optical materials such as a glass substrate, an acrylic resin and a polycarbonate resin, and thus is adapted to transmit a light at a high rate.

A thickness of the recording layer 101 is preferably equal to or larger than 0.05 mm, and equal to or smaller than 1.2 mm. The thinning of the recording layer 101 is not preferable because many recording marks RM cannot be arranged in the thickness direction of the recording layer 101, and thus the storage capacity cannot be increased in terms of the optical disc 100. In addition, setting the thickness of the recording layer 101 at being equal to or larger than 1.2 mm is not preferable because the spherical aberration of the light beam radiated is increased on the inner side.

Incidentally, a total sum of the thicknesses of the cover layer 103 transmitting the light, and the recording layer 101 is preferably equal to or smaller than 1.0 mm. The reason for this is because if the total sum of these thicknesses exceeds 1.0 mm, an astigmatism of the light beam for recording caused in the optical disc 100 becomes large when the surface of the optical disc 100 is inclined.

AntiReflection coating (AR) processing using such inorganic four layers ($Nb_2O_2/SiO_2/Nb_2O_5/SiO_2$) as to show a non-reflecting property for an incident light beam may be carried out for an outside surface of the cover layer 103 (a surface not contacting the recording layer 101).

First Change

In the optical disc 100, as with an optical disc 100B shown in FIG. 5, a substrate 104 may be provided on the second surface side of the recording layer 101. As a result, the optical disc 100B can be readily handled because in the optical disc 100B, the recording layer 101 needs not to be exposed to the outside and thus the recording layer 101 can be protected by the substrate 104. In addition, the substrate 104 can carry the physical strength of the entire optical disc 100B in accordance with the selection of the material and thickness thereof. This also applies to the cover layer 103.

Second Change

In the optical disc 100, as with an optical disc 100C shown in FIG. 6, an adhesion layer 106 may be provided between the recording layer 101 and the substrate 104. Various kinds of adhesion techniques using a pressure-sensitive adhesive agent, a thermosetting resin, a photosetting resin or the like which is used in the sticking in the general optical disc can be applied to the adhesive layer 106.

Third Change

In the optical disc 100, as with an optical disc 100D shown in FIG. 7, a plurality of recording layers 101 may be formed, and an intermediate layer 105 may be provided between each adjacent two recording layers 101. In the plurality of recording layers 101, one mark layer Y is formed in one recording layer 101. As a result, it is possible to prevent the inter-mark interference with respect to the thickness direction of the optical disc 100D.

Fourth Change

In the optical disc 100, as with an optical disc 100E shown in FIG. 8, the adhesive layer 106 may be provided between the reference layer 102 and the cover layer 103. As a result, it is possible to enhance a thickness precision of the cover layer 103 because a film having a high film thickness precision can be used in the cover layer 103.
In each of the optical disc 100A of the embodiment shown in FIG. 2, and the optical discs 100B to 100E of the first to fourth changes shown in FIGS. 5 to 8, respectively, the reference layer 102 is directly provided on the recording layer 101. For this reason, in each of the optical discs 100A to 100E, the groove and the land are formed in the recording layer 101 by using the stamper or the like, and the reference layer 102 is formed by providing the dielectric film in the recording layer 101.

Fifth to Eighth Changes

In addition, as with each of optical discs 100F to 100I of fifth to eighth changes shown in FIGS. 9 to 12, respectively, a groove forming layer 107 may be provided between the recording layer 101 and the reference layer 102. In each of the optical discs 100F to 100I, for example, a photosetting or thermosetting pressure-sensitive adhesion sheet is stuck onto the recording layer 101, and a pattern of the stamper is transferred to the pressure-sensitive adhesion sheet concerned, thereby forming the groove forming layer 107.

Ninth and Tenth Changes

As with each of optical discs 100J and 100K of ninth and tenth changes shown in FIGS. 13 and 14, respectively, the groove forming layer 107 may be formed between the cover layer 103 and the reference layer 102. In each of the optical discs 100J and 100K, for example, a photosetting or thermosetting pressure-sensitive adhesion sheet is stuck onto the cover layer 103, and a pattern of the stamper is transferred to the pressure-sensitive adhesion sheet concerned, thereby forming the groove forming layer 107.

Eleventh to Sixteenth Changes

In addition, as with each of optical discs 100L to 100Q of eleventh to sixteenth changes shown in FIGS. 15 to 20, respectively, the reference layers 102 may be provided on the both surface sides (on the first surface 100x side and the second surface 100y side), respectively, and thus two sets of servo light beams LS and information light beams LM may be made incident from both the first surface 100x and the second surface 100y to the recording layer 101, respectively.
It should be noted that the optical disc 100L of the eleventh change shown in FIG. 15 has the same structure as that of the optical disc 100A of the embodiment shown in FIG. 2 except that the reference layers 102 are provided on the first surface 100x side and the second surface 100y side, respectively. In addition, the optical disc 100M of the twelfth change shown in FIG. 16 has the same structure as that of the optical disc 100E of the fourth change shown in FIG. 8 except that the two reference layers 102 are provided on the first surface 100x side and the second surface 100y side, respectively.
The optical disc 100N of the thirteenth change shown in FIG. 17 has the same structure as that of the optical disc 100F of the fifth change shown in FIG. 9 except that the reference layers 102 are provided on the first surface 100x side and the second surface 100y side, respectively. Also, the optical disc 100O of the fourteenth change shown in FIG. 18 has the same structure as that of the optical disc 100I of the eighth change shown in FIG. 12 except that the reference layers 102 are provided on the first surface 100x side and the second surface 100y side, respectively.
As has been described, the optical disc 100 has the reference layer 102 on the incidence surface side to which the information light beam LM is made incident with the recording layer 101 as the reference. As a result, in the optical disc 100, the reference surface depth d and the surface depth f can be made to agree with each other, and the spherical aberration corresponding to the reference surface depth d can be given to the information light beam LM on a constant basis. As a result, for the optical disc 100, when the optical disc device corrects the spherical aberration in correspondence to the reference surface depth d, the spherical aberration of the information light beam LM can be precisely corrected, and thus the recording and reproducing characteristics can be enhanced.

[2. Structure of Photoreactive Resin]

Next, a description will be given with respect to a concrete structure of a photoreactive resin composed of the recording layer 101.
The recording layer 101 is made of the photoreactive resin which forms the recording mark RM formed of a cavity in the vicinity of the focal point FM of the recording information light beam LMw when the recording information

light beam LMw condensed is radiated to the recording layer 101.

The photoreactive resin preferably forms the recording mark RM through a multiple-photon absorption reaction. In the multiple-photon absorption reaction, only the light in the vicinity of the focal point FM having the very large light intensity in the recording information light beam LMw is absorbed to cause the photoreaction.

For this reason, the photoreactive resin hardly absorbs the recording information light beam LMw in any portion other than the vicinity of the focal point FM. Thus, the photoreactive resin allows the recording information light beam LMw to reach up to the inner side (the second surface 100y side) of the recording layer 101 with little attenuation of the light intensity of the recording information light beam LMw.

A part of the photoreactive resin vaporizes due to either boiling or decomposition through the heat generation corresponding to the photoreaction, thereby forming the bubble(s) as the recording mark RM in the vicinity of the focal point FM. At this time, the recording characteristics, when the recording mark RM is formed, such as the recording speed, the size, the shape and the position of the recording mark RM, and the stability of the recording mark RM are preferably enhanced as much as possible in terms of the photoreactive resin.

In general, in the one-photon absorption reaction in which one photon is absorbed to cause the photoreaction, when the recording marks RM are formed while the light intensity of the recording information light beam LMw is changed, the recording time required to form the recording mark RM is reduced approximately inversely proportional to the light intensity. The reason for this is because the probability of the photoreaction is proportional to the number of photons.

On the other hand, in the two-photon absorption reaction in which two photons are absorbed to cause the photoreaction, when the recording marks RM are formed while the light intensity of the recording information light beam LMw is changed, the recording time is reduced approximately inversely proportional to a square of the light intensity. The reason for this is because it is necessary to approximately, simultaneously absorb the two photons for the purpose of causing the photoreaction.

With regard to the photoreactive resin of this embodiment, when the recording marks RM are formed while the light intensity of the recording information light beam LMw is changed, the recording time is preferably reduced inversely proportional to the light intensity to the M-th power ($M \geq 2.9$, preferably $M \geq 3.0$, and more preferably $M \geq 3.3$).

The reason for this is because in the recording layer 101, the photoreaction is caused only in the portion, having the very large light intensity, of the recording information light beam LMw, thereby allowing the recording mark RM having the small size to be formed. As a result, for the recording layer 101, it is possible to prevent the interference caused between the recording marks RM in the phase of the reproducing of the information, and thus it is possible to enhance the recording characteristics.

The photoreactive resin preferably contains therein a multiple-photon absorption material allowing the multiple-photon absorption reaction to be caused therein as a primary constituent (50% or more of a total weight, and more preferably 70% or more of the total weight).

The reason for this is because even when a sensitivity of the multiple-photon absorption material itself is low, the photoreactive resin contains therein the multiple-photon absorption material at a high rate, thereby making it possible to enhance the sensitivity for the multiple-photon absorption in terms of the entire recording layer 101. As a result, for the recording layer 101, the recording speed can be enhanced and thus the recording characteristics can be made satisfactory.

The photoreactive resin can contain therein any of other constituents such as a low-molecular constituent and various kinds of polymers for changing thermal characteristics such as viscoelasticity in a phase of heating, and various kinds of additive agents for changing characteristics or the like in a phase of manufacture in addition to the multiple-photon absorption material. These other constituents are preferably added so as to fall within the range not allowing the recording sensitivity of the recording layer 101 to be largely reduced. Thus, a contained amount thereof is preferably less than 50% per total weight of the photoreactive resin, and is more preferably less than 30% per total weight of the photoreactive resin.

The multiple-photon absorption material is preferably made of a polymer having a weight-average molecular weight Mw of 10,000 or more. The reason for this is because this polymer can have a sufficient mechanical strength in terms of the primary constituent of the recording layer 101. As a result, in the recording layer 101, it is possible to physically stabilize the position of the recording mark RM which is formed once, and thus it is possible to enhance the recording characteristics.

Specifically, the multiple-photon absorption material preferably has the skeleton expressed by the general formula (1). It is noted that in the general formula (1), $R_1$, $R_2$, $R_3$, and $R_4$ are either hydrogen atoms or substituents which are independent of one another, and there is no limit in structure thereof. The substituents or the like, each having not so large molecular weight, such as a hydrogen atom, an alkyl group having 1 to 6 carbons, an allyl group, a cycloalkyl group, a hydroxyl group, a methoxyl group, and an ethoxyl group are especially, preferably selected as $R_1$, $R_2$, $R_3$, and $R_4$. In addition, in the general formula (1), p and q are integral numbers, respectively.

The multiple-photon absorption material is especially, preferably an amorphous polyarylate resin having a skeleton expressed by the general formula (3), or a polycarbonate resin expressed by a general formula (4):

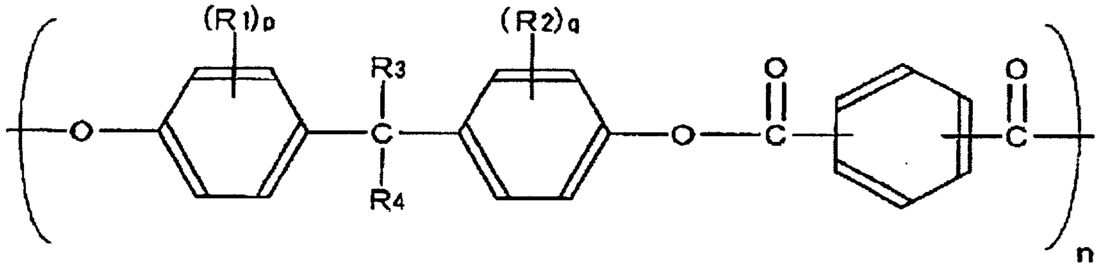

... (3)

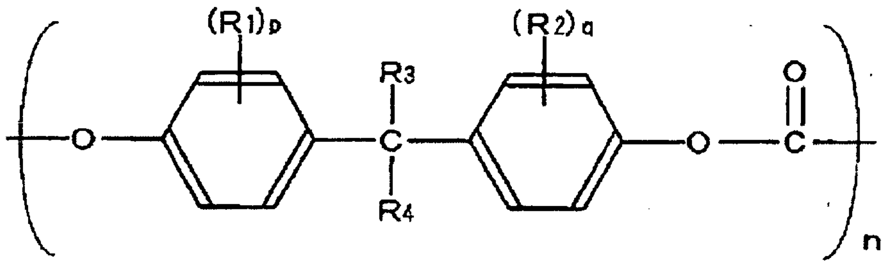

... (4)

In each of the general formulae (1), (3) and (4), $R_1$ and $R_2$, and $R_3$ and $R_4$ are especially, preferably hydrogen atoms, and methyl groups, respectively. The reason for this is because the hydrogen atom and the methyl group can be readily manufactured through either polymerization or copolymerization of a bisphenol-A, are established in manufacture method thereof, are readily available, and are inexpensive in cost.

A pellet-shaped or dice-shaped photoreactive resin is thermally fused to be formed into a disc-shaped recording layer 101 through either a thermal fusion extrusion process using a T die or injection molding. In such a manner, the recording layer 101 can be formed. In addition, the recording layer 101 can also be formed by utilizing a cast method in which after being dissolved into various kinds of solvents, the photoreactive resin is thinly cast on a metallic supporting body and the various kinds of solvents are then evaporated, or the like.

As described above, the recording layer 101 contains therein the multiple-photon absorption material having the skeleton expressed by the general formula (1). Thus, the photoreaction is caused only in the portion, having the very large light intensity, of the recording information light beam LMw, thereby making it possible to form the recording mark RM having the small size in the recording layer 101.

[3. Examples]

[3-1. Manufacture of Samples]

The amorphous polyarylate resin, the polycarbonate resin, a polyether sulfone resin, a polymethylmethacrylate (PMMA) resin, and a polycycloolefin resin were prepared as the multiple-photon absorption materials. Chemical structures of the amorphous polyarylate resin, the polycarbonate resin, the polyether sulfone resin, and the PMMA resin are expressed by the general formulae (5) to (8), respectively:

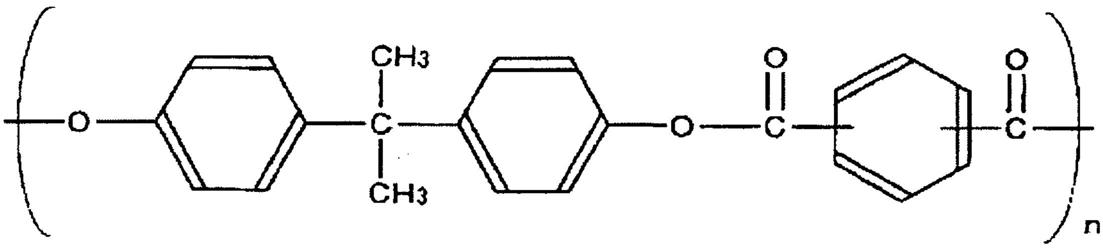

... (5)

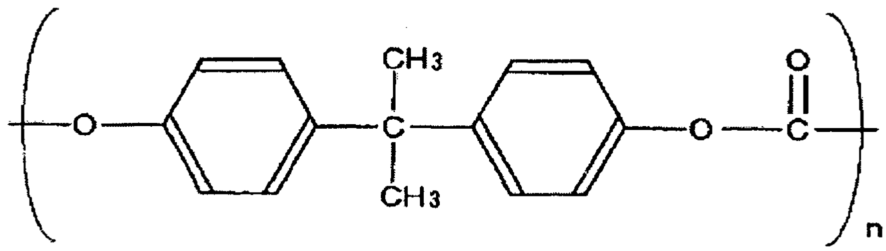

... (6)

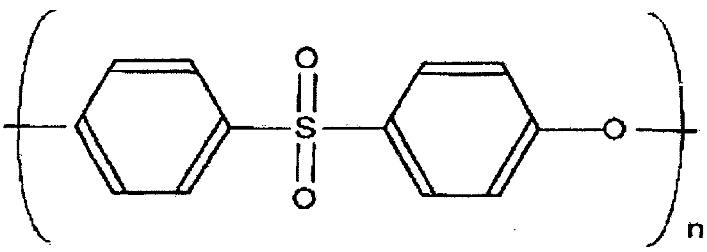

... (7)

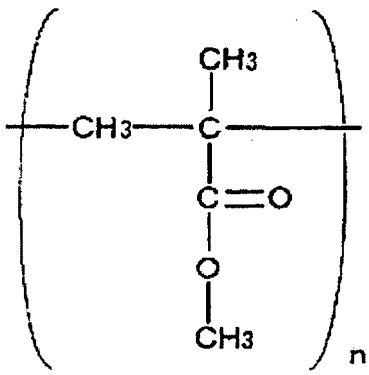

... (8)

It is noted that ZEONEX E48R (made by Nippon Zeon Co., Ltd.) was used as the polycycloolefin resin. Since these multiple-photon absorption materials are generally sold in the market, there is the possibility that these multiple-photon absorption materials contain therein various kinds of additives in the range less than 5% in addition to the amorphous polyarylate resin, the polycarbonate resin, the polyether sulfone resin, and the PMMA resin having the skeleton expressed by the general formulae (4) to (8), respectively.

The multiple-photon absorption material was thermally fused and was then formed into a disc-shaped member having a diameter of 12 cm and a thickness of 1.1 mm through the injection molding process, thereby forming the recording layer 101. That is to say, the photoreactive resin composing the recording layer 101 contains therein the multiple-photon absorption material as the primary constituent. Thus, the photoreactive resin contains therein the multiple-photon absorption material concerned at 95% or more.

At this time, the grooves and the lands having the track pitch of 0.9 μm were provided on the both surfaces of the recording layer 101, respectively. Also, the dielectric films were deposited on the both surfaces of the dielectric layer

101 by utilizing a sputtering method, thereby forming the reference layers 102, respectively. It is noted that the dielectric film had a five-layer structure of a silicon nitride/a silicon oxide/the silicon nitride/the silicon oxide/the silicon nitride. In this case, the silicon nitride had a thickness of 80 nm, and the silicon oxide had a thickness of 110 nm.

In addition, an ultraviolet curable resin was applied onto each of the reference layers 102 by utilizing a spin coat method, and was then cured by radiating an ultraviolet light to the ultraviolet curable resin, thereby forming the cover layer 103 on each of the reference layers 102. As a result, samples S1 and S3 each having the same structure as that of the optical disc 100L of the eleventh example shown in FIG. 15, and comparative samples R1 to R3 were manufactured.

In addition, with regard to a sample S2, a disc having a diameter of 12 cm was cut down from the amorphous polyarylate resin film, having a thickness of 0.2 mm, which was formed by utilizing the cast method, thereby forming the recording layer 101. Also, after the groove forming layer 107 and the reference layer 102 were formed in this order on one surface of the recording layer 101, the cover layer 103 was stuck to the resulting member, thereby manufacturing the sample S2 having the same structure as that of the optical disc 100G of the sixth example shown in FIG. 10.

TABLE 1 shows a list of the manufacture methods for the multiple-photon absorption material used in the recording layer 101, and the recording layer 101.

TABLE 1

| | Multiple-photon absorption material | Manufacture method |
|---|---|---|
| Sample 1 | Amorphous polyarylate resin | Injection molding method |
| Sample 2 | Amorphous polyarylate resin | Cast method |
| Sample 3 | Polycarbonate resin | Injection molding method |
| Comparative sample R1 | PMMA resin | Injection molding method |
| Comparative sample R2 | Polyether sulfone resin | Injection molding method |
| Comparative sample R3 | Polycycloolefin resin | Injection molding method |

[3-2. Shape of Recording Mark RM]

[3-2-1. Formation of Recording Mark RM]

Referring to FIG. 21, with an optical disc device 5, the light is radiated to the recording layer 101 in the optical disc 100 as a whole, thereby recording information in a plurality of mark layers Y supposed in the recording layer 101, or reproducing the information concerned from the recording layer 101. The plurality of mark layers Y are formed by arranging the recording marks RM. Thus, in a stage prior to formation of the recording marks RM, the mark layers Y exist virtually.

The optical disc device 5 is generally controlled by a control portion 6 composed of a Central Processing Unit (CPU). Also, various kinds of programs such as a basic program, an information recording program, and an information reproducing program are read out from a Read Only Memory (ROM) (not shown). Also, the various kinds of programs thus read out are developed in a Random Access Memory (RAM) (not shown), thereby executing various kinds of processing such as information recording processing and information reproducing processing.

The control portion 6 controls the optical pickup 7 in such a way that a light is radiated from the optical pickup 7 to the optical disc 100, and a light returned back from the optical disc 100 is received by the optical pickup 7.

Under the control made by the control portion 6, in the optical pickup 7, an information light beam LM, for example, having a wavelength of 405 nm is emitted from a recording/reproducing light source 10, and is then converted from a diverging light into a parallel light by a collimator lens 11. After that, the resulting parallel light is made incident to a beam splitter 12.

In this connection, the recording/reproducing light source 10 is adapted to adjust a light quantity of information light beam LM in accordance with the control made by the control portion 6.

The beam splitter 12 transmits a part of the information light beam LM through a reflecting/transmitting surface 12S, and makes the part of the information light beam LM incident to an objective lens 13. The objective lens 13 is adapted to condense the part of the information light beam LM, thereby focusing the part of the information light beam LM thus condensed on an arbitrary portion within the optical disc 100.

In addition, when the information reflected light beam LMr is returned back from the optical disc 100 to the objective lens 13, the objective lens 13 converts the information reflected light beam LMr into the parallel light, and

makes the resulting parallel light incident to the beam splitter 12. At this time, the beam splitter 12 reflects a part of the information reflected light beam LMr through the reflecting/transmitting surface 12S, and makes the part of the information reflected light beam LMr thus reflected incident to a condenser lens 14.

The condenser lens 14 condenses the part of the information reflected light beam LMr to radiate the part of the information reflected light beam LMr thus condensed to a light receiving element 15. In response thereto, the light receiving element 15 detects a light quantity of information reflected light beam LMr, and generates a detection signal corresponding to the light quantity of information reflected light beam LMr, thereby sending the detection signal to the control portion 6. As a result, the control portion 6 is adapted to recognize a state of detection of the information reflected light beam LMr in accordance with the detection signal.

Incidentally, the optical pickup 7 is provided with a driving portion (not shown), and thus the driving portion is adapted to rotate a table 8 in accordance with the control made by the control portion 6. Actually, the control portion 6 is adapted to control the position of the optical pickup 7, thereby moving a position of a focal point of the information light beam LM to a desired position.

As described above, the optical disc device 5 is adapted to condense the information light beam LM on an arbitrary portion within the optical disc 100, and to detect the information reflected light beam LMr returned back from the optical disc 100 to the objective lens 13.

For each of the samples S1 to S3 and comparative samples R1 to R3 being rotated, the recording information light beam LMw having the wavelength of 405 nm was radiated to a position at a surface depth of f = 50 μm through the objective lens 13 having a Numerical Aperture (NA) of 0.85. A linear speed obtained by this rotation was 0.23 m/sec.

It is noted that a titanium-sapphire laser for emitting a laser beam having a wavelength of 810 nm was used as the recording/reproducing light source 10, and the wavelength of the laser beam is converted into a wavelength of 405 nm by using a Second Harmonic Generation (SHG) element. The recording information light beam LMw was 2 psec in pulse width, 26 to 76 MHz in repetition frequency, and 5.0 to 9.0 mW in average emitted light intensity. It is noted that the average emitted light intensity represents an emitted light intensity, per unit time, obtained by averaging the recording information light beam LMw emitted from the objective lens OL.

TABLE 2 shows a size of the recording mark RM actually formed in each of the samples S1 to S3 and the comparative samples R1 to R3 (hereinafter referred to as "a mark size"), and the average emitted light intensity when the recording mark RM is formed. It is noted that the mark size represents a size of the recording information light beam LMw in the recording mark RM in an optical axis XL direction.

TABLE 2

| | Recording mark size | Average emitted light intensity [mW] |
|---|---|---|
| Sample S1 | 0.25 μm | 5.0 |
| Sample S2 | 0.25 μm | 5.0 |
| Sample S3 | 0.4 to 0.45 μm | 5.0 |
| Comparison sample R1 | > 10 μm | 9.0 |
| Comparison sample R2 | > 10 μm | 9.0 |
| Comparison sample R3 | 1.5 to 3.0 μm | 9.0 |

As can be seen from TABLE 2, in each of the samples S1 to S3, the recording mark RM having a mark size as small as 0.5 μm or less was formed at the average emitted light intensity as relatively small as 5.0 mW. On the other hand, in each of the comparative samples R1 to R3, since the mark size was as large as 1.5 μm or more, the average emitted light intensity as large as 9.0 mW was required for forming the recording mark RM.

In addition, the mark sizes of the recording marks RM in the samples S1 and S2 were identical to each other, and thus a difference between the recording marks RM in the samples S1 and S2 caused by the manufacture method for the recording layer 101 was not observed.

FIGS. 22 to 24 respectively show microscope photographs of the recording marks RM actually recorded in the respective recording layers 101 in the samples S1 and S3, and the comparative sample R3. It is noted that in these figures, a direction of a thickness of the optical disc 100 (that is, an optical axis XL direction of the recording information light beam LMw) is set as a longitudinal direction.

It is noted that FIG. 22 shows the recording marks RM which were formed under the condition that the pulse width = 2 psec, the repetition frequency = 26 MHz, the average emitted light intensity = 7 mW, and the linear speed = 0.23 m/sec. In addition, FIGS. 23 and 24 show the recording marks RM which were formed under the same condition as that in the case of the recording marks RM of the sample S1 shown in FIG. 22 except that the average emitted light intensities were 5 mW and 9 mW in the recording marks RM of the sample S3 and the comparative sample S3, respectively.

As shown in FIG. 22, in the sample S1, the recording marks RM having the mark sizes as approximately uniform as about 0.25 $\mu$m are arranged in a straight line in a surface direction.

As shown in FIG. 23, in the sample S3, the mark sizes are in the range of about 0.4 to about 0.45 $\mu$m which are slightly larger than those in the sample S1. From this, it was confirmed that the marking sizes slightly dispersed. In addition, the recording marks RM are not arranged in a straight line in the surface direction. From this, the recording positions of the recording marks RM slightly dispersed.

As shown in FIG. 24, in the comparative sample R3, the mark sizes were much larger than those in each of the samples S1 and S3, and a dispersion thereof was large. In addition, the minute bubbles were formed inside each of the recording marks RM, and thus the fine cavities were not formed in terms of the recording marks RM.

That is to say, in any of the samples S1 and S3, the recording marks RM each having the small mark size were formed. In the sample S1, the mark size was the smallest, and the recording marks RM were located away from one another and were formed approximately at equal intervals. Thus, the sample S1 had the most satisfactory recording characteristics.

In addition, in the sample S3, the mark sizes are slightly larger than those in the sample S1, and thus each adjacent two recording marks RM are close to each other. However, in the sample S3, the fine recording marks RM having no bubbles formed therein are formed. Thus, it is expected that the recording intervals are suitably set, thereby making it possible to enhance the recording characteristics.

On the other hand, in the comparative sample R3, the dispersion of the mark sizes is large, and thus the fine cavities cannot be formed in terms of the recording marks RM. Thus, it cannot be said that the recording characteristics are satisfactory.

From the foregoing, either the amorphous polyarylate resin or the polycarbonate resin is preferably used as the photoreactive resin composing the recording layer 101, and the amorphous polyarylate resin is especially preferably used as the photoreactive resin composing the recording layer 101.

As has been described, it was confirmed that either the amorphous polyarylate resin or the polycarbonate resin is used as the multiple-photon absorption material contained in the recording layer 101, thereby making it possible to enhance the recording characteristics.

[3-3. Relationship between Light Intensity and Recording Time]

Next, a relationship between the light intensity and the recording time for which the recording mark RM could be formed at the shortest time was measured with regard to the samples S1 and S3 using the amorphous polyarylate resin and the polycarbonate resin, respectively.

In this example, the optical disc device 5 (refer to FIG. 21) drives the table 8 in three directions of an X direction, a Y direction and a Z direction without rotating the table 8 in accordance with the control made by the control portion 6.

The optical disc device 5 radiated the recording information light beam LMw having the wavelength of 405 nm to a position at the surface depth of f = 50 $\mu$m in each of the samples S1 and S3 being stopped (not being rotated) through the objective lens OL having the Numerical Aperture NA = 0.85. At this time, the recording time was measured for each of the samples S1 and S3 while the light intensity (the peak power and the average emitted light intensity) of the recording information light beam LMw was changed.

The recording information light beam LMw was radiated five times at the same light intensity. In this case, the shortest radiation time for which the five recording marks RM were formed is set as the recording time for the five radiations. The peak power is the maximum emitted light intensity of the information light beam LMw outputted in the form of the pulse, and is obtained through the calculation from the average emitted intensity measured. The pulse width of the information light beam LMw was 2 psec, and the repetition frequency thereof was 76 MHz.

At this time, the peak power and the average emitted light intensity were changed so that the recording time ranged from $1.00 \times 10^{-1}$ sec to $2.50 \times 10^{-6}$ sec, and the recording time was measured in each order of the time at least one point or more. As a result, the measurements were carried out at seven or eight points in total. It is noted that the order of the time means $10^{-2}$ sec, $10^{-3}$ sec, $10^{-4}$ sec, $10^{-5}$ sec, and $10^{-6}$ sec.

TABLE 3 shows a relationship between the peak power and the average emitted light intensity, and the recording time in the sample S 1.

TABLE 3

| Peak power [W] | Average emitted light intensity [mW] | Recording time [sec] |
|---|---|---|
| 20 | 1.0 | $4.00 \times 10^{-2}$ |
| 30 | 1.5 | $1.00 \times 10^{-3}$ |
| 49 | 2.5 | $2.50 \times 10^{-4}$ |

(continued)

| Peak power [W] | Average emitted light intensity [mW] | Recording time [sec] |
|---|---|---|
| 99 | 5.0 | $4.00 \times 10^{-5}$ |
| 148 | 7.5 | $1.40 \times 10^{-5}$ |
| 198 | 10.0 | $7.00 \times 10^{-6}$ |
| 247 | 12.5 | $3.00 \times 10^{-6}$ |

Incidentally, TABLE 3 shows that in the shortest time of $3.00 \times 10^{-6}$ sec in TABLE 3, about 228 pulses were outputted. With the titanium-sapphire laser used in this case, the actual measurement cannot be carried out because the repetition frequency is not sufficient. However, the supposition that the sample S1 was rotated and the recording was carried out at the repetition frequency of 1 GHz means that when the shortest recording time in TABLE 3 was converted into the linear speed, the recording was carried out at the linear speed of about 2.5 m/sec.

Note that, it is confirmed that by further increasing the peak power in the sample S1, the recording can also be carried out even at the same linear speed of 4.92 m/sec as that in the BD in conversion of the recording time.

FIG. 25 shows a relationship between the peak power and the recording time in the sample S1, and FIG. 26 shows a relationship between the average emitted light intensity and the recording time in the sample S1.

In addition, the relationship between the peak power and the recording time, and the relationship between the average emitted light intensity and the recording time were expressed in the form of linear approximations, respectively, by using a spread sheet software Excel (registered trademark) 2003 (made by Microsoft (registered trademark) Corporation) and exponential function fitting (power approximation). Expressions (1) and (2) of the relational lines obtained as results of the linear approximations are shown below.

The relationship between the peak power and the recording time in the sample S1 is expressed by Expression (1):

$$y = 209.82x^{-3.318} \quad \ldots (1)$$

where x represents the peak power [W], and y represents the recording time [sec].

Also, the relationship between the average emitted light intensity and the recording time in the sample S1 is expressed by Expression (2):

$$y = 0.0105x^{-3.318} \quad \ldots (2)$$

where x represents the average emitted light intensity [W], and y represents the recording time [sec].

It is noted that although since the peak power is calculated from the average emitted light intensity, gradients based on the value of the difference between the peak power and the average emitted light intensity are different from each other between Expression (1) and Expression (2), the values of the powers of x are identical to each other between Expression (1) and Expression (2).

In the sample S1, it was found out that the recording time increases in proportional to the light intensity (the peak power and the average emitted light intensity) to the m-th power (m = -3.318), that is, inversely proportional to the light intensity to the M-th power (M = 3.318). This suggests that the sample S1 is heated mainly by the three-photon absorption reaction.

That is to say, in the recording layer 101 of the sample S1, a temperature in the vicinity of the focal point FM rises in accordance with the heat generation caused by the three-photon absorption reaction to vaporize the constituent (s) of the recording layer 101, thereby forming the recording mark RM. The three-photon absorption reaction is caused in proportional to the light intensity to the third power. For this reason, in the sample S1, when the light intensity increases, the heat generation speed increases in proportional to the light intensity to the third power. As a result, it can be said that the recording time is shortened inversely proportional to the light intensity to the third power.

In addition, TABLE 4 shows a relationship between the peak power and the average emitted light intensity, and the recording time in the sample S3.

TABLE 4

| Peak power [W] | Average emitted light intensity [mW] | Recording time [sec] |
|---|---|---|
| 8 | 0.4 | $1.00 \times 10^{-1}$ |
| 12 | 0.6 | $3.00 \times 10^{-2}$ |
| 17 | 0.9 | $8.00 \times 10^{-3}$ |
| 30 | 1.5 | $8.00 \times 10^{-4}$ |
| 49 | 2.5 | $2.00 \times 10^{-4}$ |
| 99 | 5.0 | $4.00 \times 10^{-5}$ |
| 148 | 7.5 | $1.30 \times 10^{-5}$ |
| 267 | 13.5 | $3.00 \times 10^{-6}$ |

FIG. 27 shows a relationship between the peak power and the recording time in the sample S3 by using a solid line. Also, FIG. 28 shows a relationship between the average emitted light intensity and the recording time in the sample S3 by using a solid line. Expressions (3) and (4) of the relational lines obtained as results of the linear approximations are shown below.

The relationship between the average emitted light intensity and the recording time in the sample S3 is expressed by Expression (3):

$$y = 40.486x^{-3.0083} \qquad \dots (3)$$

where x represents the peak power [W], and y represents the recording time [sec].

Also, the relationship between the average emitted light intensity and the recording time in the sample S3 is expressed by Expression (4):

$$y = 0.0051x^{-3.0083} \qquad \dots (4)$$

where x represents the average emitted light intensity [mW], and y represents the recording time [sec].

In the sample S3, it was found out that the recording time decreases in proportional to the light intensity to the m-th power (m = -3.0083), that is, inversely proportional to the light intensity to the M-th power (M = 3.0083). From this, it is understood that in the sample S3, the heat generation is mainly caused by the three-photon absorption reaction.

That is to say, it was confirmed that in any of the samples S1 and S3 each having the small mark size and the satisfactory recording characteristics, the heat generation is mainly caused by the three-photon absorption reaction.

Comparing the relational curves of the samples S1 and S3 with each other, the gradients of the sample S1 is about five times as large as that of the sample S3. This shows that the recording sensitivity of the sample S1 is about five times as large as that of the sample S3.

Actually, it is confirmed that in the sample S1, the recording can be carried out at the same linear speed as that of the BD. However, it is also confirmed that in the sample S3, the recording cannot be carried out at the same linear speed as that of the BD.

Moreover, comparing the relational curves of the samples S1 and S3, the sample S1 has M = 3.318, and the sample S3 has M = 3.0083, and thus the value of M is larger in the sample S1 than in the sample S3. From this, it is thought that the mark size can be made small as the value of M is larger.

In addition, a sample S4 was manufactured by using the polycarbonate resin having the weight-average molecular weight Mw of about 60,000 and having the chemical structure expressed by the general formula (6), and the experiments were carried out similarly to the case of the sample S3. TABLE 5 shows a relationship between the peak power and the average emitted light intensity, and the recording time in the sample S4. It is noted that in the sample S3, the polycarbonate resin having the weight-average molecular weight Mw of about 36,000 is used.

TABLE 5

| Peak power [W] | Average emitted light intensity [mW] | Recording time [sec] |
|---|---|---|
| 15 | 0.75 | $1.4 \times 10^{-2}$ |

(continued)

| Peak power [W] | Average emitted light intensity [mW] | Recording time [sec] |
|---|---|---|
| 20 | 1.0 | $6.0 \times 10^{-3}$ |
| 30 | 1.5 | $7.0 \times 10^{-4}$ |
| 50 | 2.5 | $2.0 \times 10^{-4}$ |
| 100 | 5.0 | $3.0 \times 10^{-5}$ |
| 150 | 7.5 | $1.3 \times 10^{-5}$ |
| 200 | 10.0 | $5.0 \times 10^{-6}$ |
| 250 | 12.5 | $2.5 \times 10^{-6}$ |

FIG. 28 shows a relationship between the average emitted light intensity and the recording time in the sample S3 by using a broken line. The gradient of the relational line obtained as a result of the linear approximation of the relationship between the average emitted light intensity and the recording time is shown below.

The relationship between the average emitted light intensity and the recording time in the sample S4 is expressed by Expression (5):

$$y = 0.0043x^{-2.9788} \quad \dots (5)$$

where x represents the average emitted light intensity [mW], and y represents the recording time [sec].

It was found out that in the sample S4, the recording time decreases in proportional to the light intensity to the m-th power (m = -2.9788), that is, inversely proportional to the light intensity to the M-th power (M = 2.9788). This value of M in the sample S4 is approximately identical to that of M in the sample S3, and thus it was confirmed that the molecular weight of the resin hardly exerts an influence on the three-photon absorption reaction.

From those experimental results, it was confirmed that in each of the samples S1, S3 and S4, the recording time increases inversely proportional to the light intensity to the M-th power ($M \geq 2.9788$), and the recording marks RM are formed in accordance with the three-photon absorption reaction. It should be noted that when the measurement error and the like are taken into consideration, the value of M is preferably equal to or larger than 2.9.

Here, the skeletons of the amorphous polyarylate resin and the polycarbonate resin which were used as the multiple-photon absorption materials in the sample S1, and the samples S3 and S4, respectively, are expressed by the general formulae (5) and (6), respectively.

The amorphous polyarylate resin, for example, is created by copolymerizing one of a phthalic acid, an aromatic dicarboxylic acid or an aromatic dicarboxylic acid dichloride, and the bisphenol-A having the skeleton expressed by the general formula (2) with each other.

The polycarbonate resin, for example, is created by using the bisphenol-A and a phosgene as the raw material, and by polymerizing the bisphenols-A with each other through an ester bond.

That is to say, each of the amorphous polyarylate resin and the polycarbonate resin has a skeleton expressed by the general formula (9):

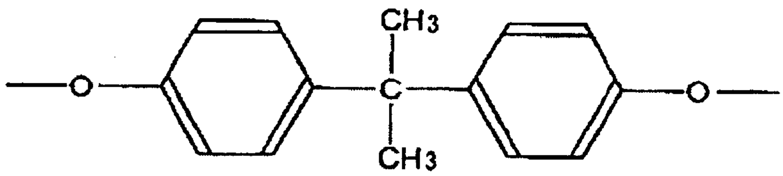

... (9)

In general, as shown in a non-patent literary document 1 of Journal of Chemical Physics Vol. 119, p. 8327 (2003): Mark G. Kuzyk "Fundamental limits on two-photon absorption cross sections," an absorption cross section of a molecule in which the multiple-photon absorption reaction such as the two-photon absorption reaction is caused is theoretically proportional to the number of $\pi$ electrons which are effectively conjugated with one another. A molecule having a large $\pi$ electron system, that is, a molecule adapted to adsorb a light having a long wavelength tends to have a large multiple-photon absorption cross section.

Since the chemical structure expressed in the general formula (9) has the structure in which the $\pi$ electrons

are conjugated with one another, it is thought that each of the amorphous polyarylate resin and the polycarbonate resin causes the three-photon absorption reaction with its origin in the chemical structure expressed in the general formula (9).

In addition, each of the amorphous polyarylate resin and the polycarbonate resin has the skeleton expressed by the general formula (10) obtained by adding the ester bond to the general formula (9):

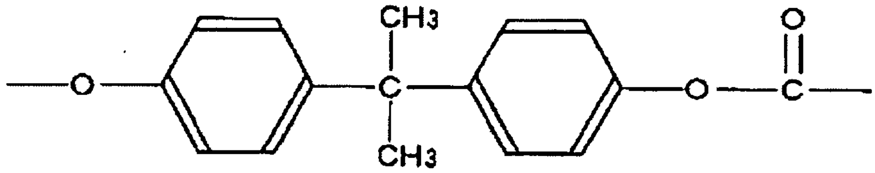

... (10)

As a result, it is thought that in each of the amorphous polyarylate resin and the polycarbonate resin, the conjugated system becomes longer, and thus the three-photon absorption reaction is effectively caused therein.

In addition, the amorphous polyarylate resin has a skeleton obtained by adding a benzoyl group to the general formula (10). It is thought that in the amorphous polyarylate resin, the number of $\pi$ electrons effectively conjugated with one another is increased due to the presence of the benzoyl group, thereby enhancing the recording sensitivity.

Actually, the non-patent literary document 1 describes that even in the compounds having the same skeleton, the chemical structure partially changes, whereby the two photon absorption cross section gradually changes.

In other words, it is thought that in each of the amorphous polyarylate resin and the polycarbonate resin, even when as shown in the general formula (1), the substituent is substituted for a part of or all of the hydrogen atoms and the ethyl groups of the general formulae (9) and (10), the three-photon absorption reaction is basically caused.

It is thought that the substituent has such a structure as to lengthen the conjugated system of the $\pi$ electrons, thereby further enhancing the sensitivity of the three-photon absorption reaction. Specifically, a carbonyl group, a methoxyl group, an ethoxyl group, an ester group, a cyano group, a carboxylic acid group, a hydroxyl group or the like is especially, preferably selected as the substituent.

As has been described, it was confirmed that each of the samples S1 and S3 allowing the respective mark sizes to be made small generates the heat through the three-photon absorption reaction due to the skeleton expressed by the general formula (1), thereby forming the recording mark RM.

[3-4. Reproduction of Information]

While the sample S1 is rotated, the recording information light beam LMw having the wavelength of 405 nm was radiated to the positions at the surface depths of f = 50 $\mu$m, 100 $\mu$m and 150 $\mu$m through the objective lens 13 having the Numerical Aperture NA = 0.85, thereby forming the recording marks RM. The linear speed obtained by the rotation was 0.23 m/sec.

Similarly to the case of the formation of the recording marks RM, a reading information light beam LMi having a wavelength of 405 nm, and a light intensity of 0.5 mW was outputted in the form of a D.C. style to the recording layer 101 of the sample S1 having the recording marks RM formed therein through the objective lens 13 having the Numerical Aperture NA = 0.85. At this time, the reading information light beam LMi was received by a light receiving element (not shown), thereby creating a regenerative signal representing a light quantity of the information reflected light beam LMr thus received.

FIGS. 29, 30 and 31 show the regenerative signals when the reading information light beam LMi was radiated to the positions at the surface depths of f = 50 $\mu$m, 100 $\mu$m and 150 $\mu$m, respectively. The regenerative signal having a large intensity difference corresponding to presence or absence of the recording mark RM was obtained from each of the surface depths of f = 50 $\mu$m, 100 $\mu$m and 150 $\mu$m. In addition, no difference in regenerative signal was observed depending on the surface depths f.

As has been described, it was confirmed that the excellent regenerative signal is obtained in the sample S1 irrespective of the various kinds of surface depths f within the recording layer 101. In addition, it was also confirmed that even when a plurality of mark layers Y are formed within the recording layer 101, the excellent regenerative signals are obtained from the respective mark layers Y.

[4. Operation and Effects]

According to the structure described above, the recording mark RM formed of the cavity is formed in the

recording layer 101 of the optical disc 100 as the optical information recording medium according to the embodiment of the present invention in accordance with the recording information light beam LMw as the recording light. The recording layer 101 contains therein the compound having the skeleton expressed by the general formula (1) (in which $R_1$, $R_2$, $R_3$, and $R_4$ are either the hydrogen atoms or the substituents).

As a result, the recording mark RM having the small mark size can be formed in the recording layer 101 in accordance with the multiple-photon absorption reaction originating from the chemical structure expressed by the general formula (1). Thus, it is possible to enhance the recording characteristics.

The recording layer 101 contains therein the compound expressed by either the general formula (3) or (4). As a result, the recording mark RM having the small mark size can be formed in the recording layer 101 in accordance with the multiple-photon absorption reaction originating from the chemical structure expressed by either the general formula (3) or (4).

Incidentally, in the recording layer containing therein such a general two-photon absorption material as to be described in Patent Document 1, since the sensitivity was low, the emitted light intensity of about 10 $GW/cm^2$ was required. As a result, it was necessary to use a femtosecond laser such as the titanium-sapphire laser. This femtosecond laser is very expensive. In addition thereto, the repetition frequency is low and thus the performance is insufficient for the optical recording.

That is to say, for carrying out the optical recording, it was necessary to use the laser, having the relative low emitted light intensity, such as a picosecond laser, and thus it was necessary to reduce the light intensity of the laser beam required to form the recording mark RM.

The recording layer 101 was designed to contain the compound having the skeleton expressed by the general formula (5). As a result, it was confirmed that the recording sensitivity of the recording layer 101 can be enhanced, and the recording mark RM can be actually formed in the recording layer 101 with a pulse output of picoseconds (2 psec). That is to say, the recording mark RM can be formed in the recording layer 101 by using the picosecond laser.

In addition, it was confirmed that the recording mark RM can be precisely formed in the position corresponding to the focal point FM of the recording information light beam LMw, thereby enhancing the recording characteristics, and the mark size of the recording mark RM can be made as small as about 0.25 $\mu$m.

The recording layer 101 was designed to contain the compound having the skeleton expressed by the general formula (6). As a result, it was confirmed that the recording sensitivity of the recording layer 101 can be enhanced, thereby improving the recording speed, and the mark size of the recording mark RM can be made as small as about 0.4 $\mu$m.

The recording mark RM formed of the cavity is formed in the recording layer 101 in accordance with the recording information light beam LMw, and the recording time is reduced inversely proportional to the light intensity to the M-th power (preferably $M \geq 2.9$, more preferably $M \geq 3.0$). As a result, for the recording layer 101, the mark size of the recording mark RM can be suppressed so as to be equal to or smaller than 0.4 $\mu$m, thereby enhancing the recording characteristics.

For the recording layer 101, the recording time allowing the recording mark RM to be formed at the shortest time is reduced inversely proportional to the light intensity to the M-th power ($M \geq 3.3$). As a result, for the recording layer 101, the mark size of the recording mark RM can be suppressed so as to be equal to or smaller than 0.25 $\mu$m, thereby enhancing the recording characteristics, and the storage capacity can be increased in terms of the optical disc 100.

The recording layer 101 contains therein the multiple-photon absorption material allowing the multiple-photon absorption reaction to be caused therein as the primary constituent as the photoreactive resin in which the recording mark RM formed of the cavity is formed in accordance with the recording information light beam LMw.

As a result, the rate of the multiple-photon absorption material containing therein the photosensitive resin can be increased in the recording layer 101. Also, the recording sensitivity of the recording layer 101 can be enhanced by using the multiple-photon absorption material having the lower sensitivity than that of the general multiple-photon absorption material. As a result, the recording mark RM can be formed in the recording layer 101 by using the laser, having the relatively low emitted light intensity, such as the picosecond laser.

The recording layer 101 contains therein either a polymer or a copolymer of the bisphenol-A having the skeleton expressed by the general formula (2) as the photoreactive resin. As a result, the recording characteristics of the recording layer 101 can be enhanced in accordance with the multiple-photon absorption originating from the structure of the bisphenol-A. Also, the inexpensive resin can be used in the recording layer, thereby reducing the manufacture cost of the optical disc 100.

According to the structure described above, the recording layer 101 of the optical disc 100 has the skeleton expressed by the general formula (9), whereby the recording mark RM having the small mark size can be formed in accordance with the three-photon absorption reaction originating from the general formula (9), and the inter-mark interference can be suppressed. Thus, it is possible to realize the optical information recording medium having the satisfactory recording characteristics.

<Other Embodiments>

[5. Other Embodiments]

It is noted that in the embodiment described above, the description has been given with respect to the case where the optical disc 100 has the reference layer 102. However, the present invention is by no means limited thereto, and the optical disc 100 does not necessarily have the reference layer 102. In this case, for example, a servo mark or the like is formed in the recording layer 101, and the optical information recording/reproducing apparatus detects the servo mark, thereby making it possible to determine the target position PG.

In addition, in the embodiment described above, the description has been given with respect to the case where the multiple-photon absorption material composes the photoreactive resin. However, the present invention is by no means limited thereto, and thus all it takes is to contain at least the multiple-photon absorption material as the photoreactive resin. For example, a resin material, having a low molecular weight, for changing the physical characteristics of the recording layer 101 may be mixed, or any other suitable kind of polymer or the like may be mixed in the form of an alloy.

Moreover, in the embodiment described above, the description has been given with respect to the case where the recording mark is formed in accordance with the three-photon absorption reaction caused in the multiple-photon absorption material. However, the present invention is by no means limited thereto. That is to say, there may also be added the multiple-photon absorption material, having the high sensitivity, such as any of various kinds of organic dyes such as a cyanine dye, a merocyanine dye, an arylidene dye, an oxonol dye, a squarium dye, an azoic dye, and a phtalocyanine dye, or various kinds of inorganic crystals. As a result, according to the embodiment of the present invention, the recording speed can be further increased. In addition, various kinds of additives or sensitizing dyes such as a cyanine system dye, a conmarin system dye, and a quinoline system dye, or the like may be also be added as may be necessary. Also, in addition to the three-photon absorption reaction, the two-photon absorption reaction, a multiple-photon absorption reaction having four or more photons, and combination thereof may also be available.

Moreover, in the embodiment described above, the description has been given with respect to the case where the multiple-photon absorption reaction is caused for the information recording light beam LMw having the wavelength of 405 nm. However, the present invention is by no means limited thereto, and thus there is no limit to the wavelength of the information recording light beam LMw as long as the multiple-photon absorption reaction is caused. In short, all it takes is that the recording mark RM formed of the bubble(s) can be suitably formed in the vicinity of the target mask position within the recording layer 101.

Moreover, in the embodiment described above, the description has been given with respect to the case where the recording marks RM are three-dimensionally formed. However, the present invention is by no means limited thereto, and thus, for example, by having only one layer of the virtual mark recording layer, the recording marks may be two-dimensionally formed.

Moreover, in the embodiment described above, the description has been given with respect to the case where, for example, the recording mark RM formed of the cavity is formed by either vaporizing or thermally decomposing the multiple-photon absorption material through the three-photon absorption reaction. However, the present invention is by no means limited thereto, and thus, for example, the recording mark RM may also be formed by changing a refractive index of the multiple-photon absorption material through the three-photon absorption reaction. In this case, it is also possible that the information recording light beam LMw emitted from one light source is separated into two light beams, and the resulting two light beams are radiated to the same target mark position from the directions opposite to each other, thereby forming the recording mark RM formed of a hologram.

Moreover, in the embodiment described above, the description has been given with respect to the case where the optical disc (optical information recording medium) 100 is formed as disc-shaped one. However, the present invention is by no means limited thereto, and thus there is no limit to the shape of the optical information recording medium. For example, the optical information recording medium may also be formed in the form of an optical information recording medium having a rectangular shape or a square shape.

Moreover, in the embodiment described above, the description has been given with respect to the case where the information reflected light beam LMr reflected by the recording mark RM is received. However, the present invention is by no means limited thereto. That is to say, a light receiving element for receiving a transmitted light of the reading information light beam LMi instead of receiving the information reflected light beam LMr may be disposed, and optical modulation of the reading information light beam LMi corresponding to presence or absence of the recording mark RM may be detected, thereby reproducing the information based on the optical modulation of the reading information light beam LMi.

Moreover, in the embodiment described above, the description has been given with respect to the case where each of the polycarbonate resin and the amorphous polyarylate resin is made either the polymer or the copolymer of the bisphenol-A. However, the present invention is by no means limited thereto. That is to say, each of the polycarbonate resin and the amorphous polyarylate resin is not necessarily created from the bisphenol-A.

Moreover, in the embodiment described above, the description has been given with respect to the case where each of the polycarbonate resin and the amorphous polyarylate resin is contained in the photoreactive resin in terms of the multiple-photon absorption material. However, the present invention is by no means limited thereto. In a word, all it takes is that the multiple-photon absorption material has the skeleton expressed by the general formula (1), and it is also possible to use a resin such as an epoxy resin. In addition, the multiple-photon absorption material may not be the so-called thermoplastic resin which is adapted to be thermally fused or dissolved into a solvent. Thus, for the multiple-photon absorption material, it may also be possible to structure a polymer acting as the multiple-photon absorption material by curing a monomer as with a thermosetting resin or a photo-curable resin. For example, it is possible to form the recording layer 101 containing therein a polymer as the multiple-photon absorption material. In this case, the polymer is created by mixing the bisphenol-A and a curing agent (and other materials if necessary) with each other, and by heating them.

Moreover, in the embodiment described above, the description has been given with respect to the case where for the recording layer 101, the recording time is reduced inversely proportional to the light intensity to the M-th power ($M \geq 2.9$). However, the present invention is by no means limited thereto. In a word, all it takes is that the multiple-photon absorption material has the skeleton expressed by the general formula (1), and thus the reduction of the recording time is not necessarily confirmed.

Moreover, in the embodiment described above, the description has been given with respect to the case where the optical disc 100 as the optical information recording medium is composed of the recording layer 101 as the recording layer. However, the present invention is by no means limited thereto. Thus, the optical information recording medium may also be composed of the recording layer having any of other suitable various kinds of structures.

The present invention can be utilized in the optical information recording/reproducing apparatus as well or the like for recording/reproducing the large-capacity information such as the image contents or the sound contents in/from the recording medium such as the optical information recording medium.

## Claims

1. An optical information recording medium, comprising
a recording layer in which a recording mark formed of a cavity is formed in accordance with a light for recording, and which contains therein a compound having a skeleton expressed by the general formula (1):

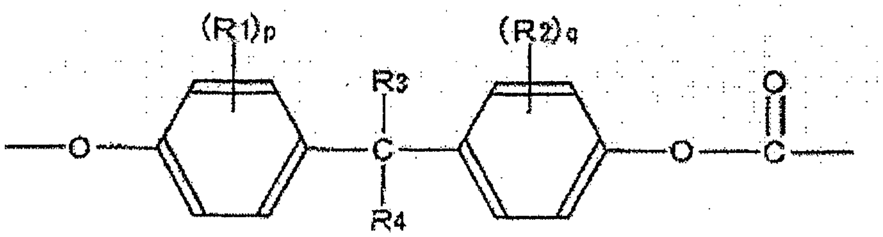

... (1)

where $R_1$, $R_2$, $R_3$, and $R_4$ are either hydrogen atoms or substituents.

2. The optical information recording medium according to claim 1, wherein said recording layer contains therein a compound having a skeleton expressed by either the general formula (2) or the general formula (3):

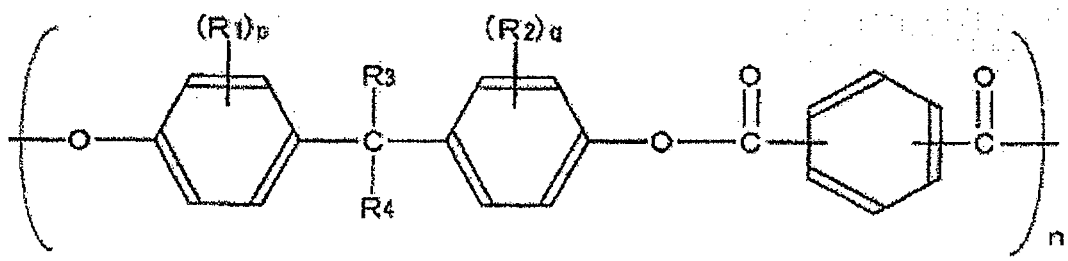

... (2)

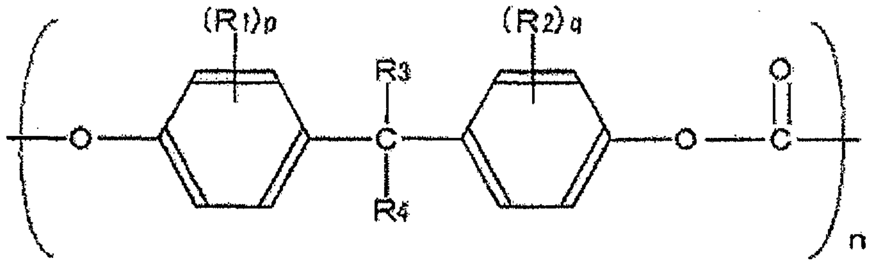

... (3)

3. The optical information recording medium according to claim 2, wherein said recording layer contains therein a compound having a skeleton expressed by the general formula (4):

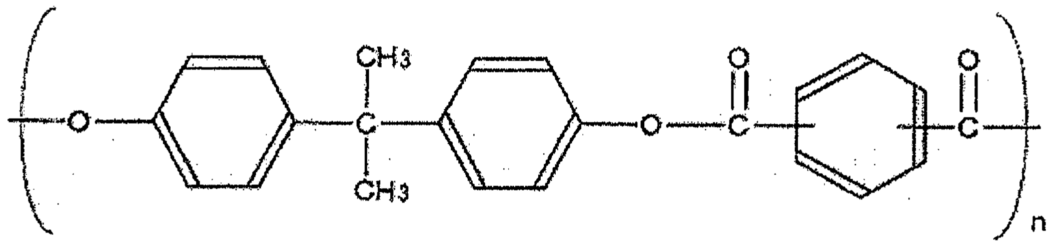

... (4)

4. The optical information recording medium according to claim 2, wherein said recording layer contains therein a compound having a skeleton expressed by the general formula (5):

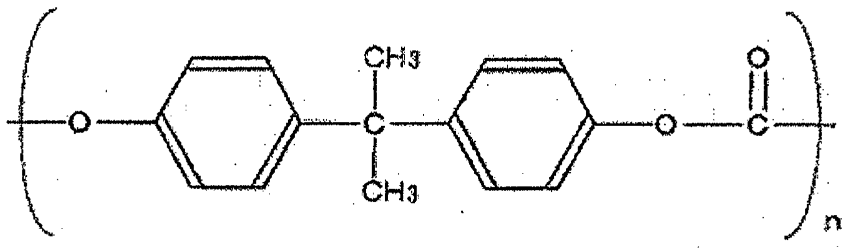

... (5)

5. The optical information recording medium according to claim 2, wherein the compound has the skeleton expressed by either the general formula (2) or the general formula (3).

6. An optical information recording medium, comprising a recording layer in which a recording mark formed of a cavity is formed in accordance with a light for recording, and which contains therein either a polymer or a copolymer of a bisphenol-A having a skeleton expressed by the general formula (6):

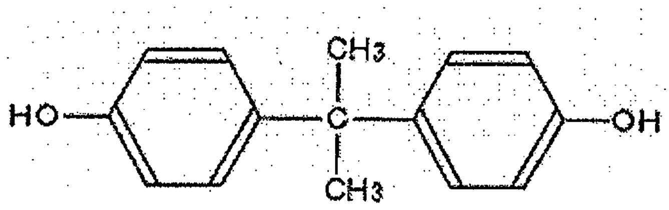

... (6)

**Patentansprüche**

1. Optisches Informationsaufzeichnungsmedium, aufweisend eine Aufzeichnungsschicht, in der eine aus einer Höhlung gebildete Aufzeichnungsmarke entsprechend einem Licht zur Aufzeichnung ausgebildet ist und die eine Verbindung enthält, die ein durch die generelle Formel (1)

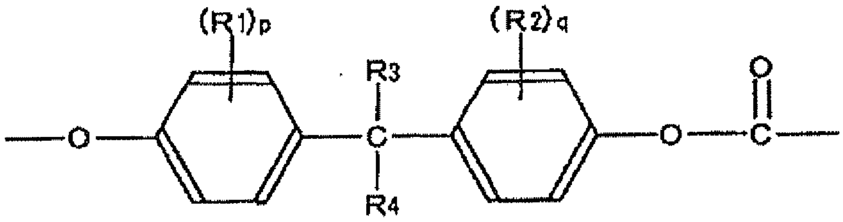

... (1)

ausgedrücktes Skelett aufweist, wobei $R_1$, $R_2$, $R_3$ und $R_4$ entweder Wasserstoffatome oder Substituenten sind.

2. Optisches Informationsaufzezchungsmedium nach Anspruch 1, wobei die Aufzeichnungsschicht eine Verbindung enthält, die ein durch entweder die generelle Formel (2) oder die generelle Formel (3)

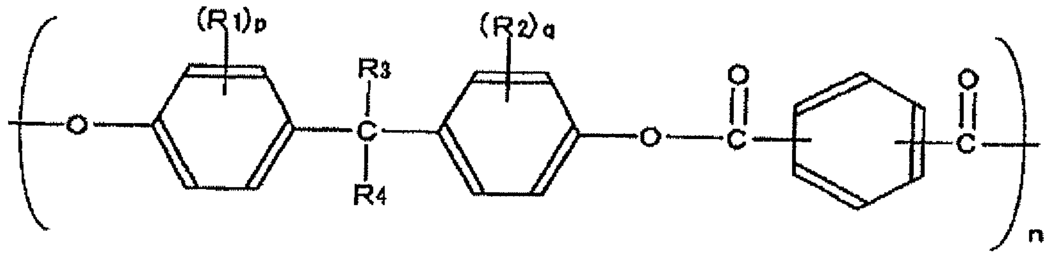

... (2)

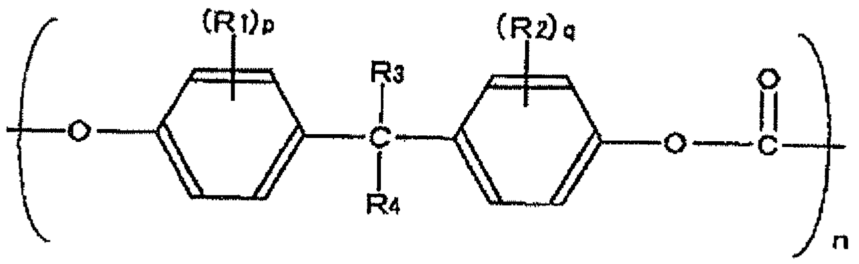

... (3)

ausgedrücktes Skelett aufweist.

3. Optisches Informationsaufzeichnungsmedium nach Anspruch 2, wobei die Aufzeichnungsschicht eine Verbindung enthält, die ein durch die generelle Formel (4)

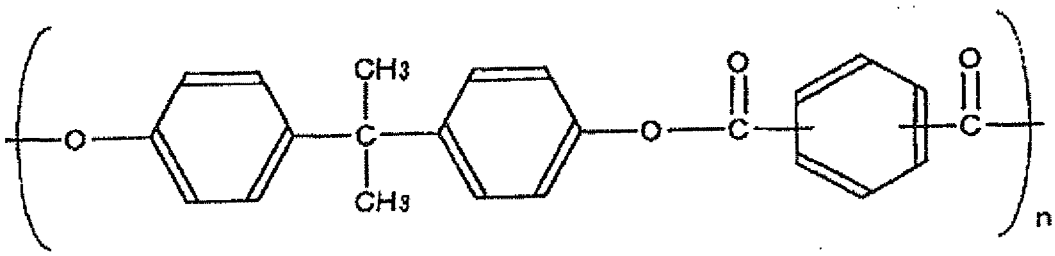

... (4)

ausgedrücktes Skelett aufweist.

4. Optisches Informationsaufzeichnungsmedium nach Anspruch 2, wobei die Aufzeichnungsschicht eine Verbindung enthält, die ein durch die generelle Formel (5)

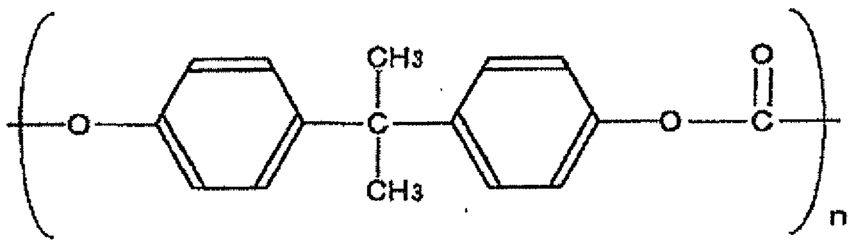

... (5)

ausgedrücktes Skelett aufweist.

5. Optisches Informationsaufzeichnungsmedium nach Anspruch 2, wobei die Verbindung ein durch entweder die generelle Formel (2) oder die generelle Formel (3) ausgedrücktes Skelett aufweist.

6. Optisches Informationsaufzeichnungsmedium, aufweisend eine Aufzeichnungsschicht, in der eine aus einer Höhlung gebildete Aufzeichnungsmarke entsprechend einem Licht zur Aufzeichnung ausgebildet ist, und die entweder ein Polymer oder ein Copolymer eines Bisphenols-A mit einem durch die generelle Formel (6)

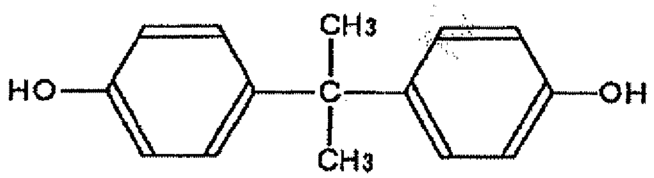

... (6)

ausgedrückten Skelett enthält.

## Revendications

1. Support d'enregistrement d'information optique, comprenant une couche d'enregistrement dans laquelle une marque d'enregistrement constituée d'une cavité est formée selon une lumière pour l'enregistrement, et laquelle contient dans celle-ci un composé présentant un squelette exprimé par la formule générale (1) :

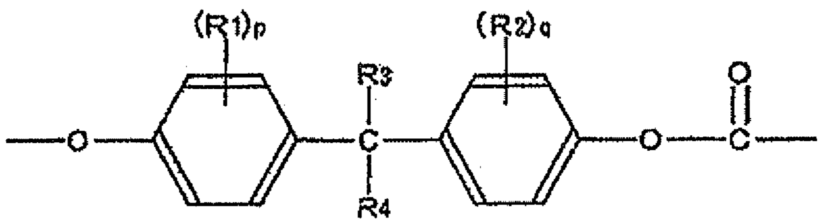

... (1)

dans laquelle $R_1$, $R_2$, $R_3$ et $R_4$ sont soit des atomes d'hydrogène, soit des substituants.

2. Support d'enregistrement d'information optique selon la revendication 1, dans lequel ladite couche d'enregistrement contient dans celle-ci un composé présentant un squelette exprimé soit par la formule générale (2) soit par la formule générale (3) :

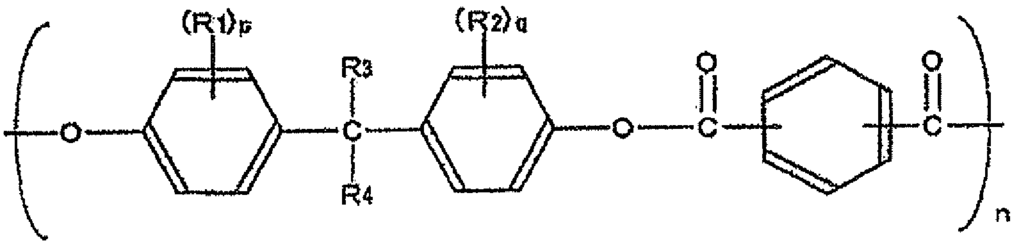

... (2)

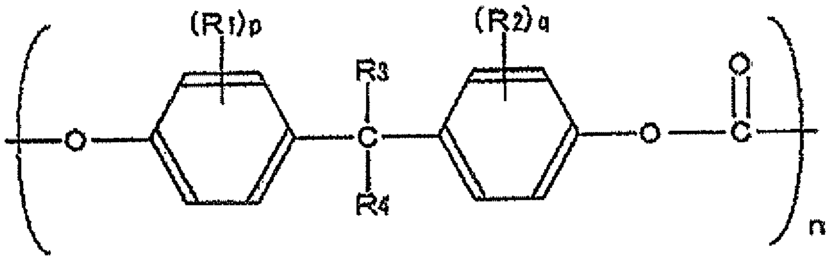

... (3)

3. Support d'enregistrement d'information optique selon la revendication 2, dans lequel ladite couche d'enregistrement contient dans celle-ci un composé présentant un squelette exprimé par la formule générale (4) :

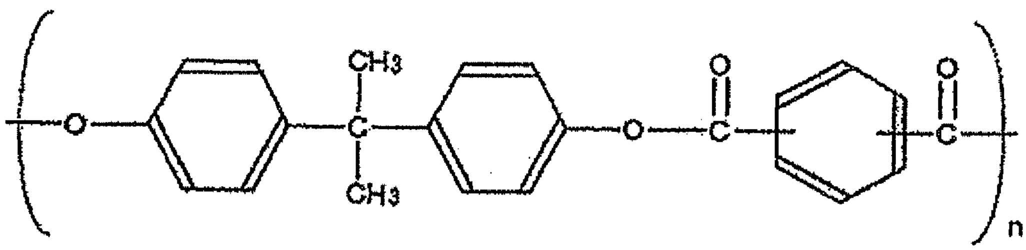

... (4)

4. Support d'enregistrement d'information optique selon la revendication 2, dans lequel ladite couche d'enregistrement contient dans celle-ci un composé présentant un squelette exprimé par la formule générale (5) :

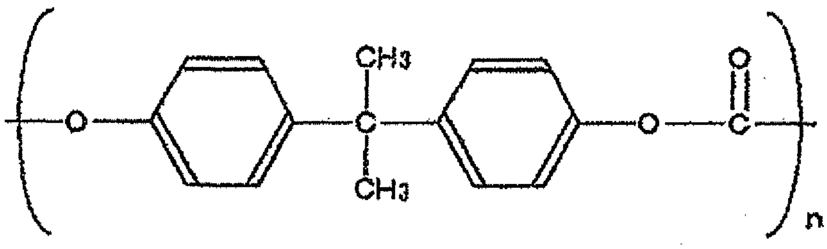

... (5)

5. Support d'enregistrement d'information optique selon la revendication 2, dans lequel le composé présente le squelette exprimé soit par la formule générale (2), soit par la formule générale (3).

6. Support d'enregistrement d'information optique, comprenant une couche d'enregistrement dans laquelle une marque d'enregistrement constituée d'une cavité est formée selon une lumière pour l'enregistrement, et laquelle contient dans celle-ci soit un polymère, soit un copolymère d'un bisphénol A présentant un squelette exprimé par la formule générale (6) :

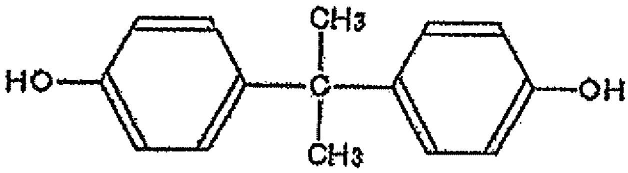

... (6)

FIG. 1

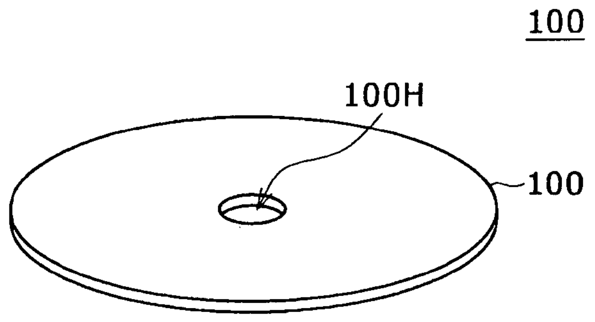


FIG. 2

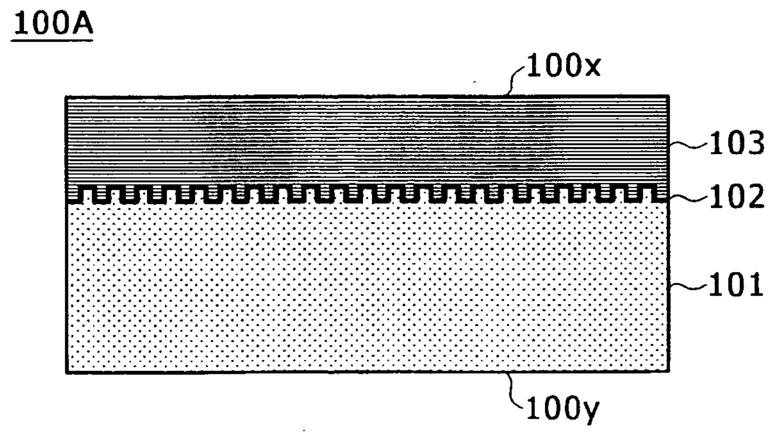

FIG. 3

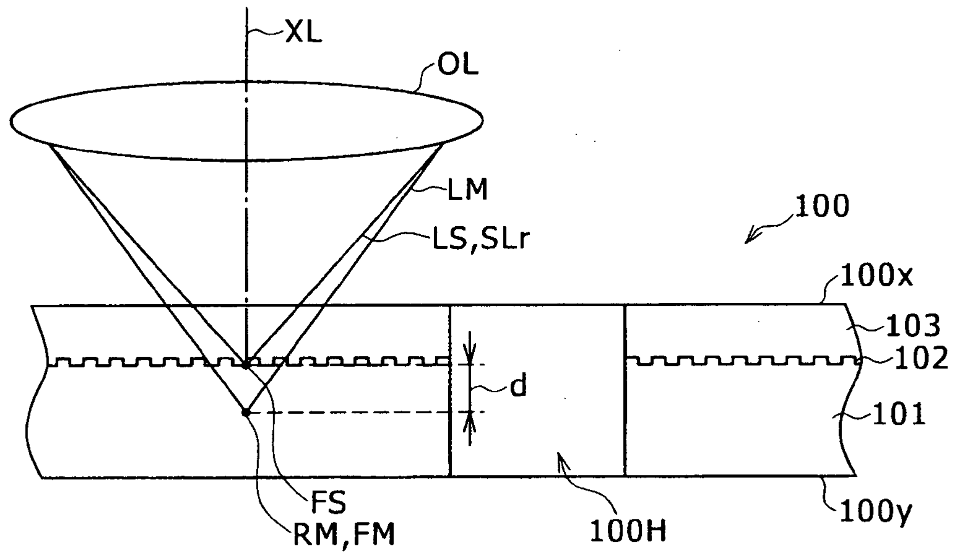


FIG. 4A

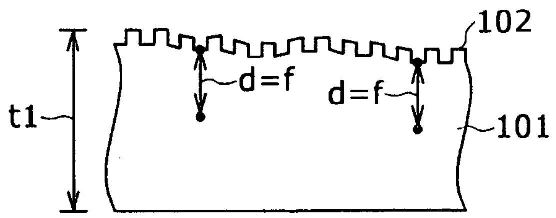


FIG. 4B

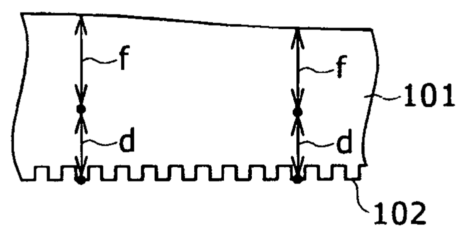

FIG. 5

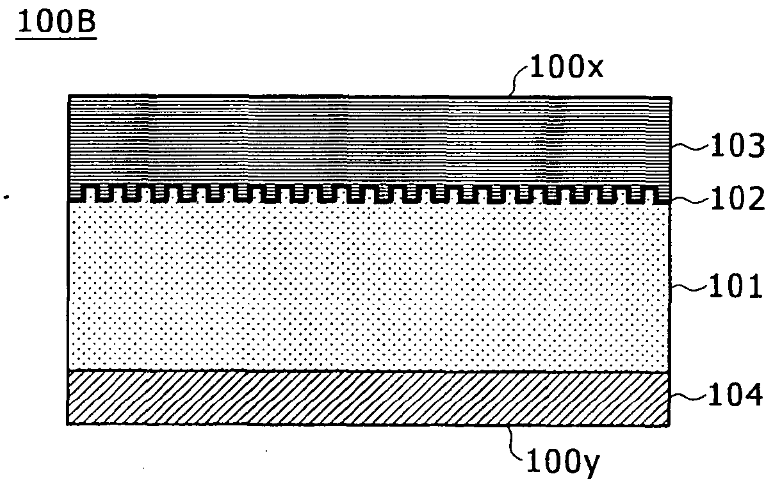
100B
100x
103
102
101
104
100y

FIG. 6

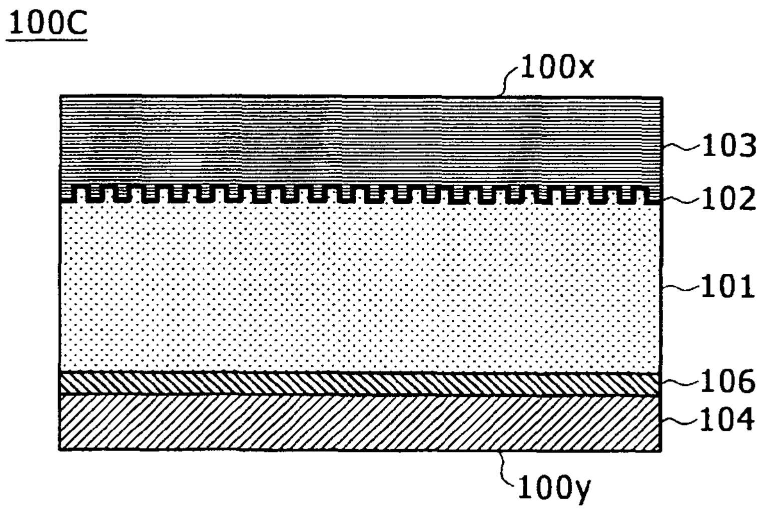
100C
100x
103
102
101
106
104
100y

FIG.7

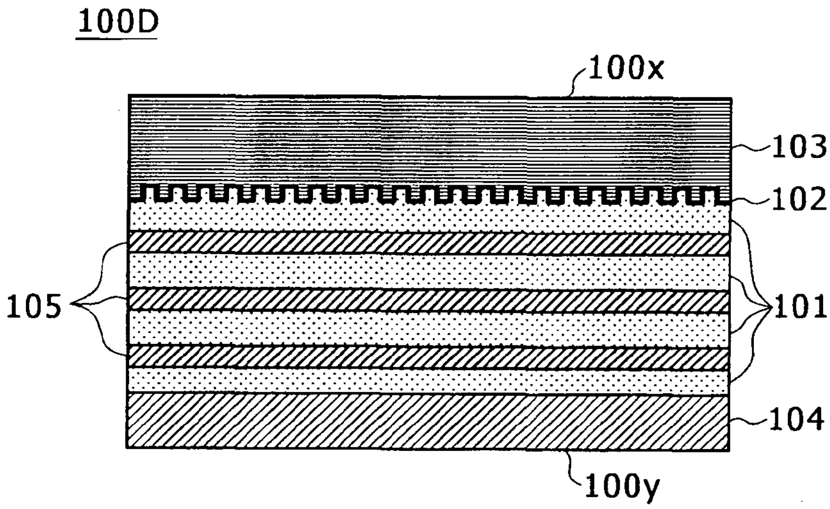
100D
100x
103
102
105
101
104
100y

FIG.8

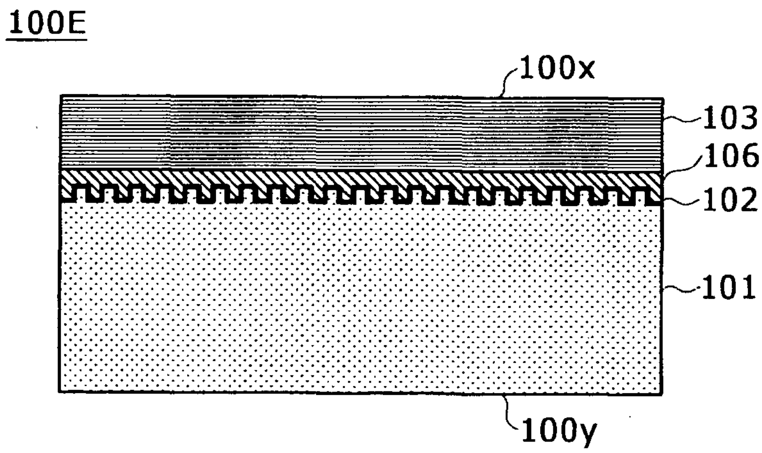
100E
100x
103
106
102
101
100y

FIG. 9

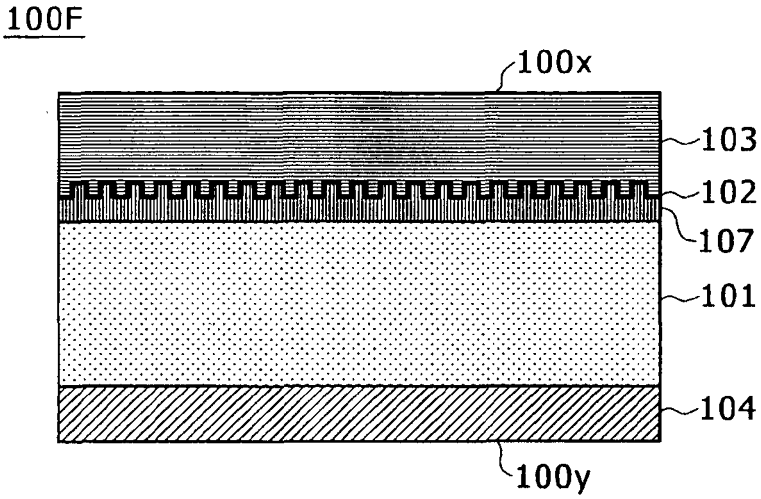
100F
100x
103
102
107
101
104
100y

FIG. 10

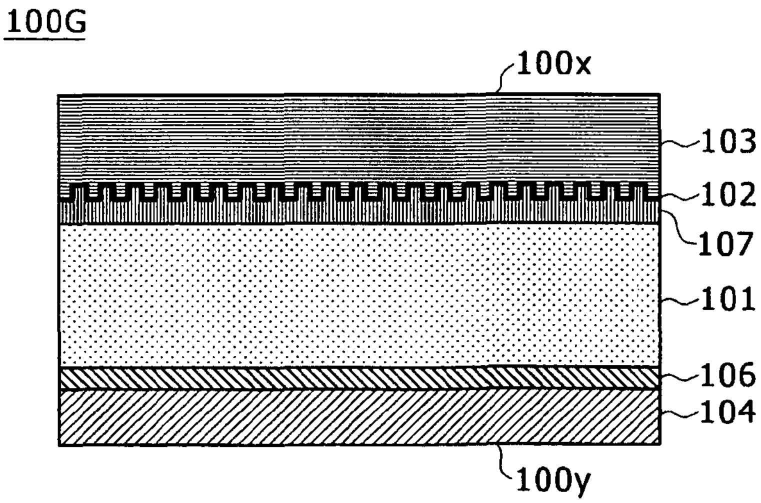
100G
100x
103
102
107
101
106
104
100y

FIG.11

100H

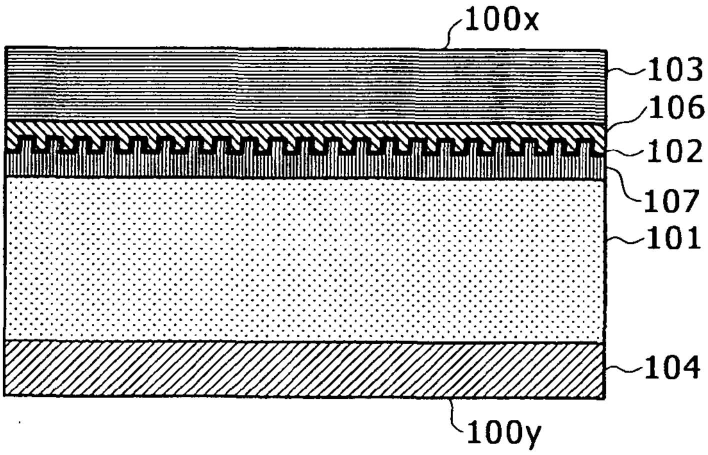


FIG.12

100I

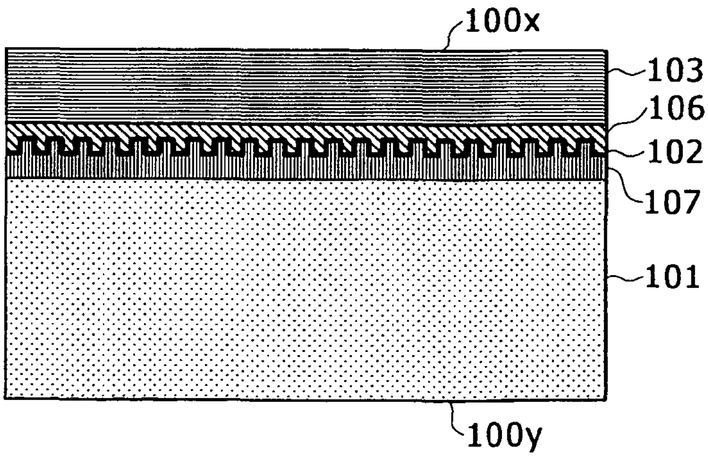

FIG.13

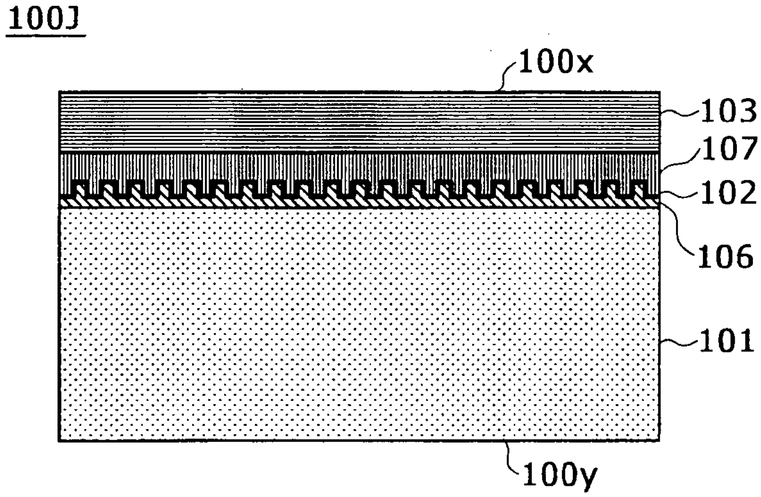
100J
100x
103
107
102
106
101
100y

FIG.14

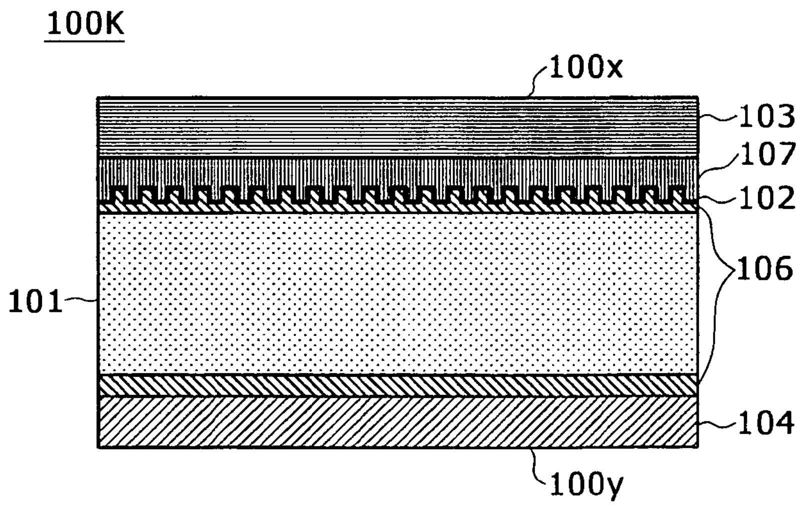
100K
100x
103
107
102
106
101
104
100y

FIG.15

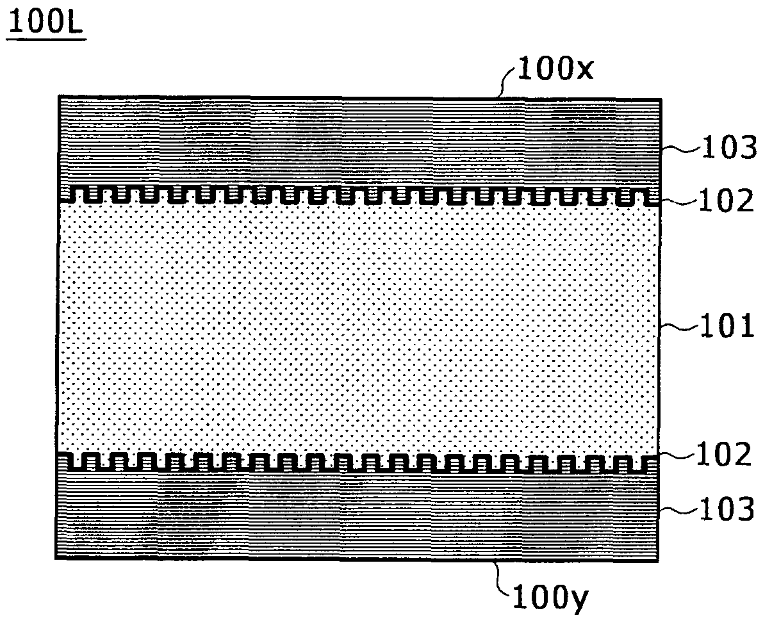
100L
100x
103
102
101
102
103
100y

FIG.16

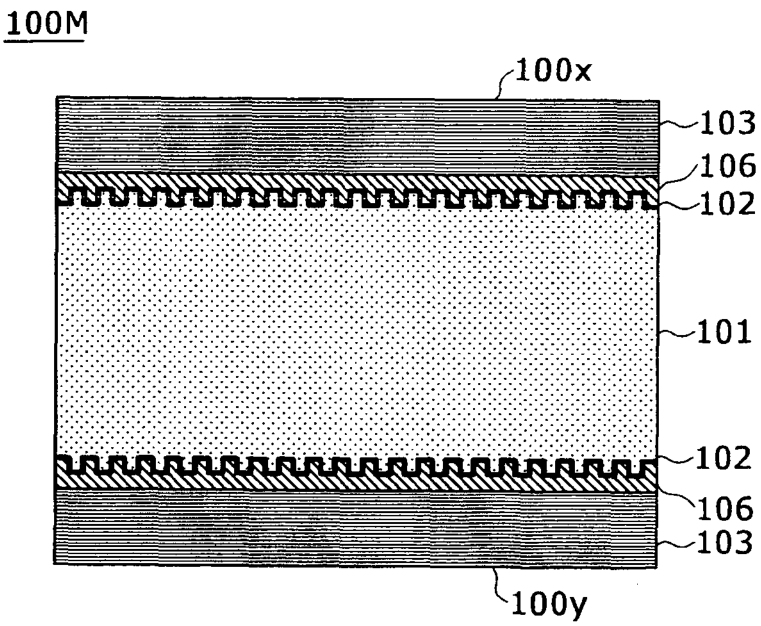
100M
100x
103
106
102
101
102
106
103
100y

FIG.17

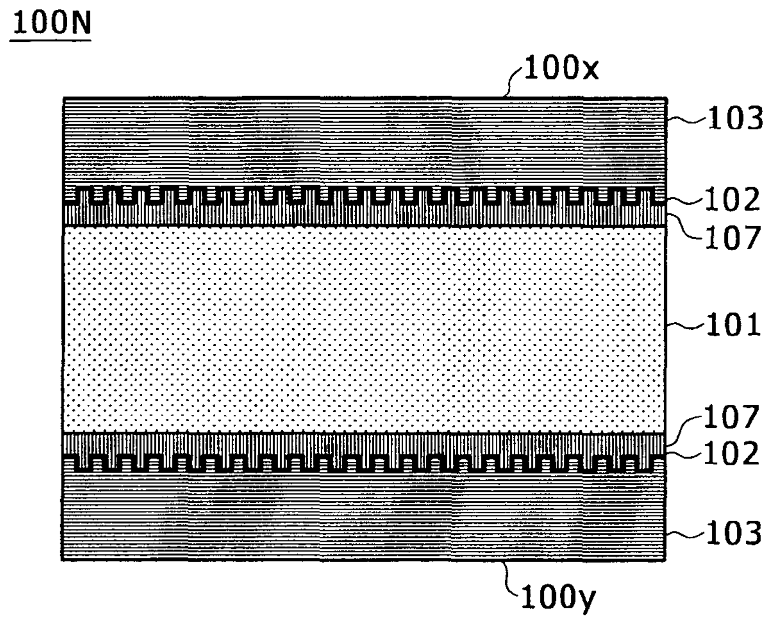
100N
100x
103
102
107
101
107
102
103
100y

FIG.18

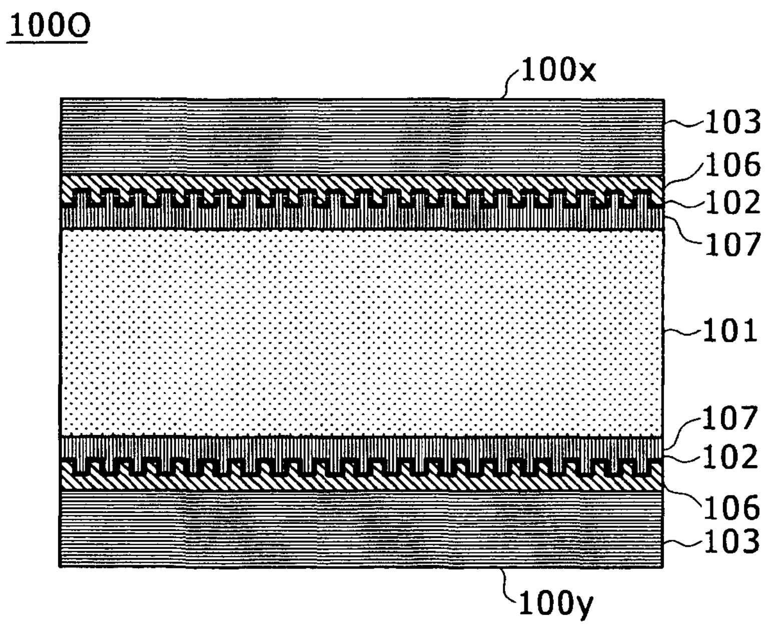
100O
100x
103
106
102
107
101
107
102
106
103
100y

FIG.19

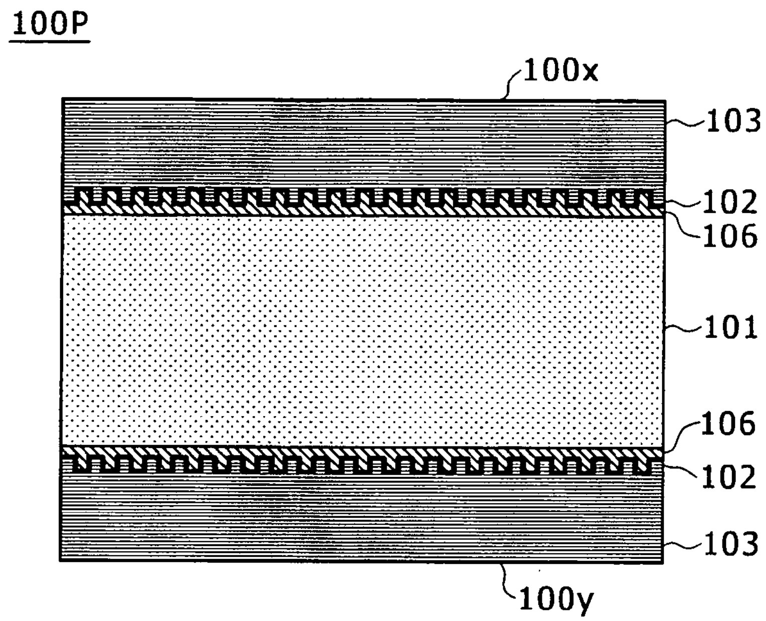
100P
100x
103
102
106
101
106
102
103
100y

FIG.20

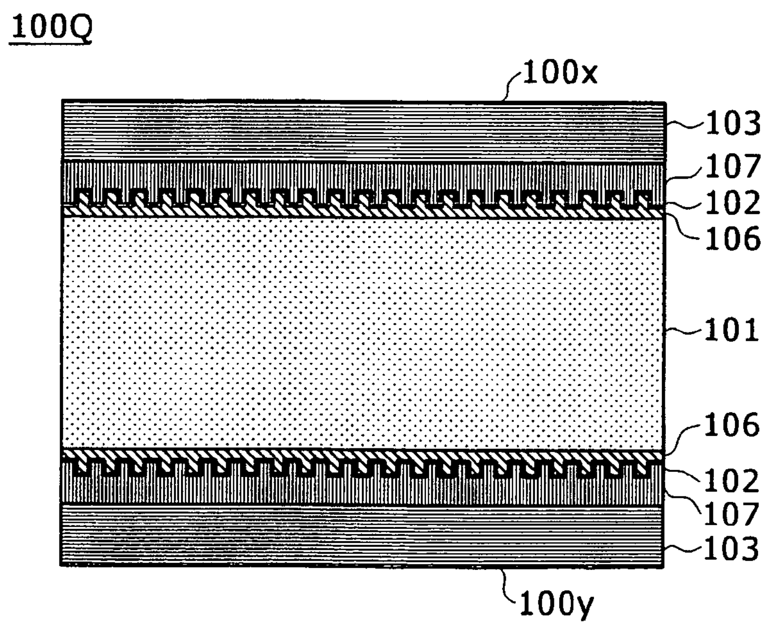
100Q
100x
103
107
102
106
101
106
102
107
103
100y

FIG.21

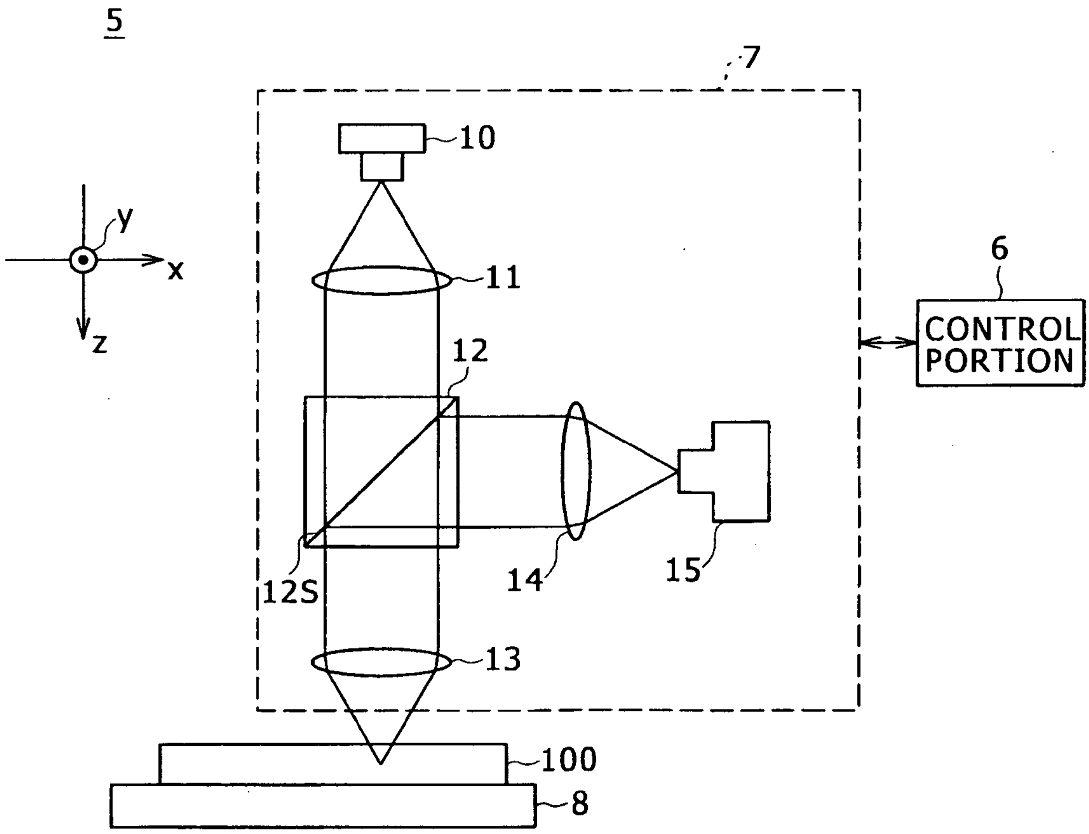

FIG.22

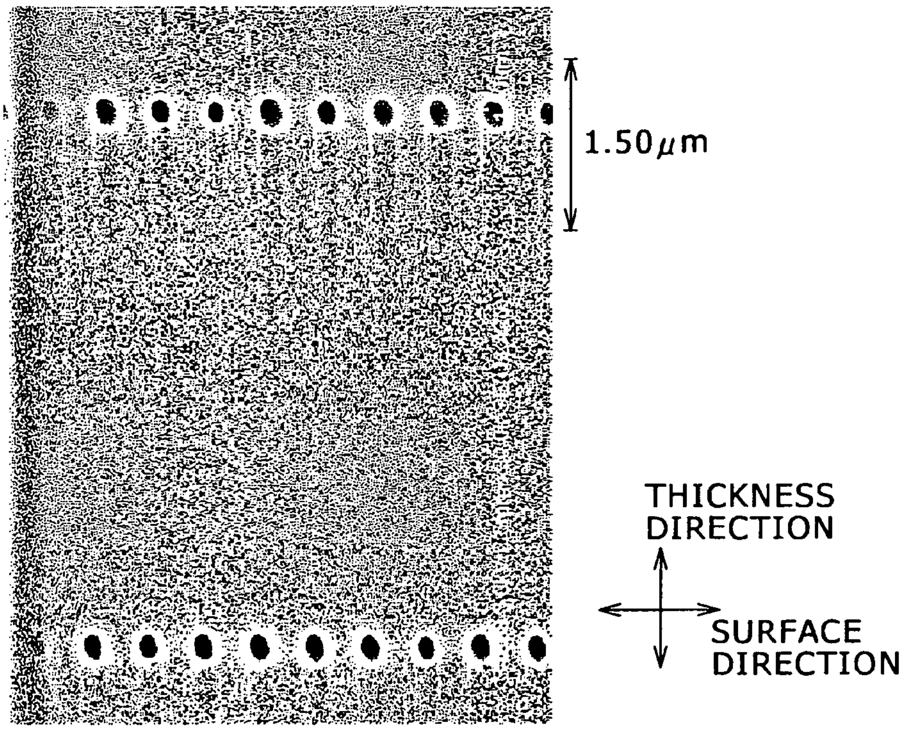


FIG.23

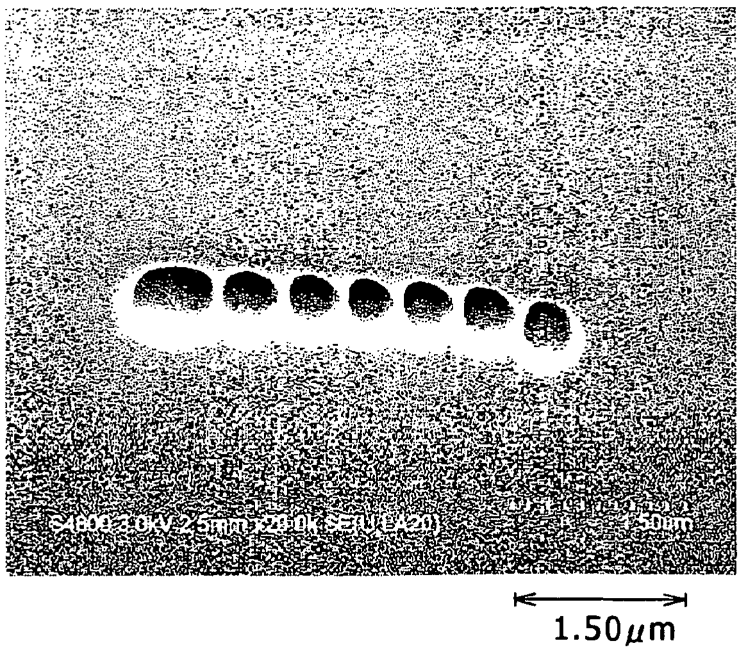

FIG.24

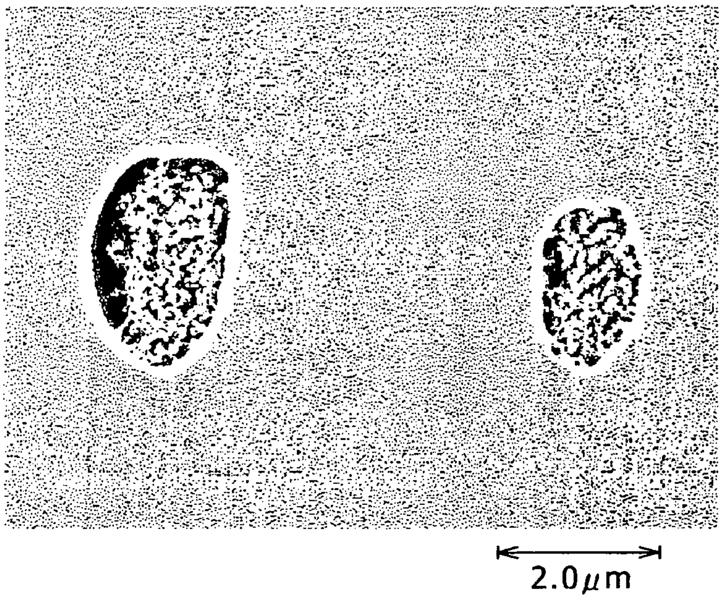
2.0μm

FIG.25

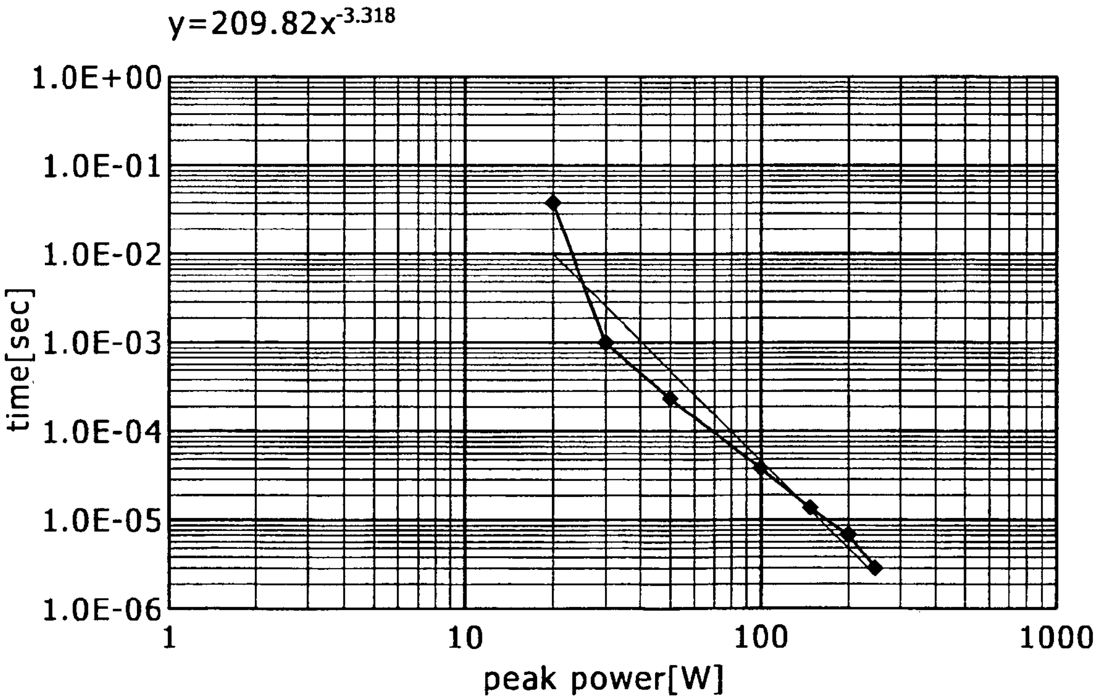
y=209.82x^-3.318
1.0E+00
1.0E-01
1.0E-02
1.0E-03
1.0E-04
1.0E-05
1.0E-06
time[sec]
1
10
100
1000
peak power[W]

FIG.26

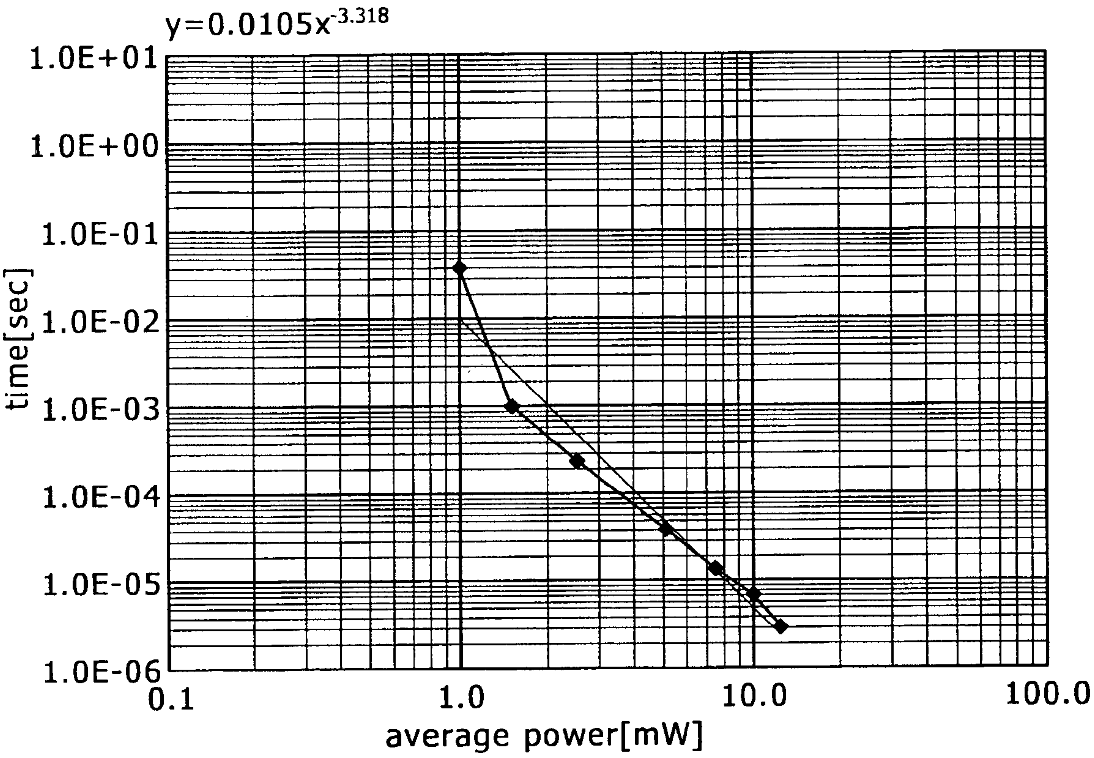
y=0.0105x^-3.318
1.0E+01
1.0E+00
1.0E-01
1.0E-02
1.0E-03
1.0E-04
1.0E-05
1.0E-06
time[sec]
0.1
1.0
10.0
100.0
average power[mW]

FIG.27

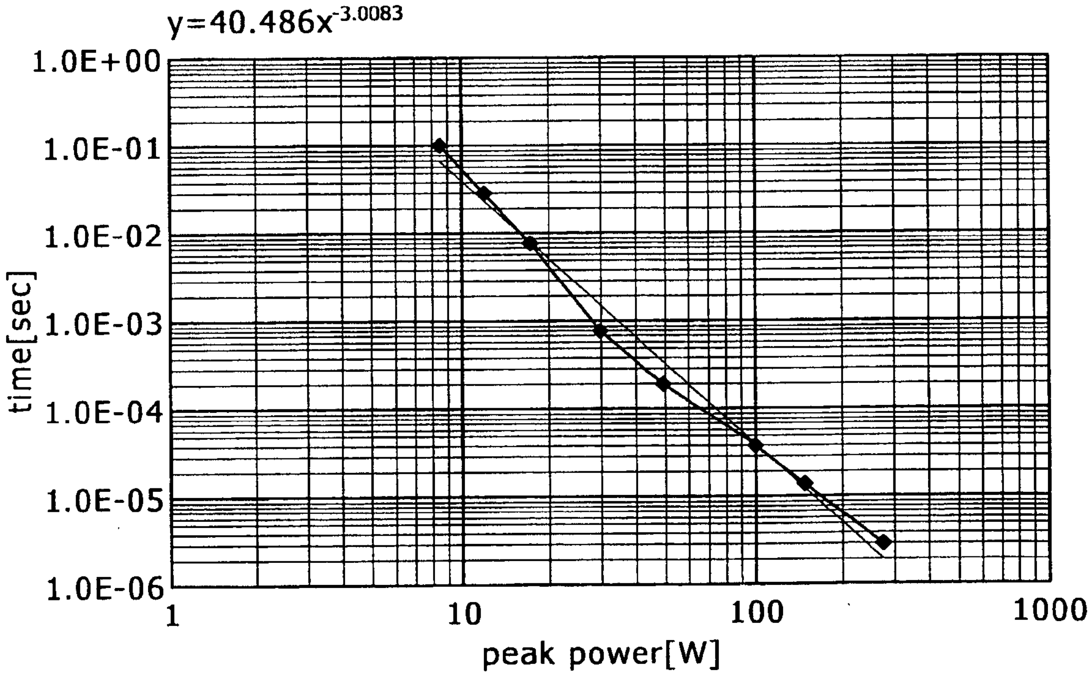
y=40.486x^-3.0083
1.0E+00
1.0E-01
1.0E-02
1.0E-03
1.0E-04
1.0E-05
1.0E-06
time[sec]
1
10
100
1000
peak power[W]

FIG.28

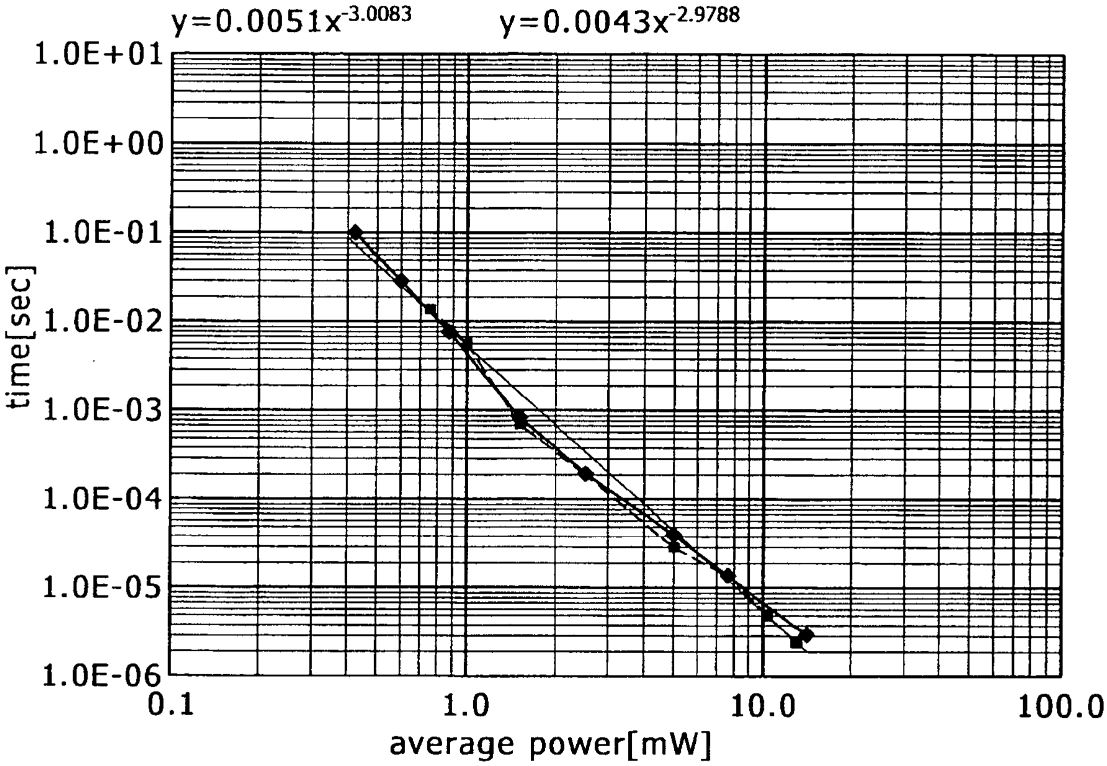

y=0.0051x-3.0083
y=0.0043x-2.9788
1.0E+01
1.0E+00
1.0E-01
1.0E-02
1.0E-03
1.0E-04
1.0E-05
1.0E-06
time[sec]
0.1
1.0
10.0
100.0
average power[mW]


FIG.29

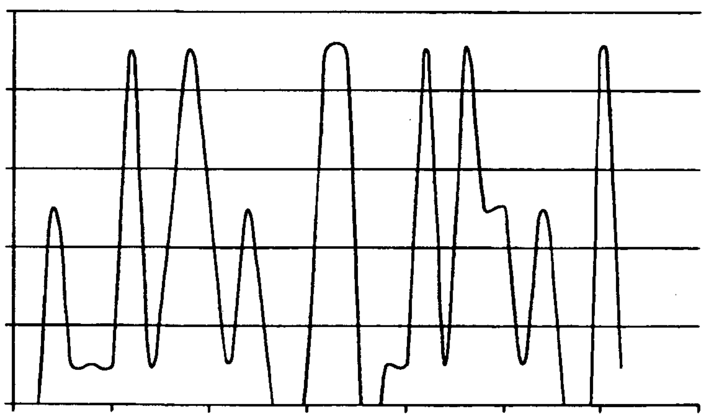

FIG.30

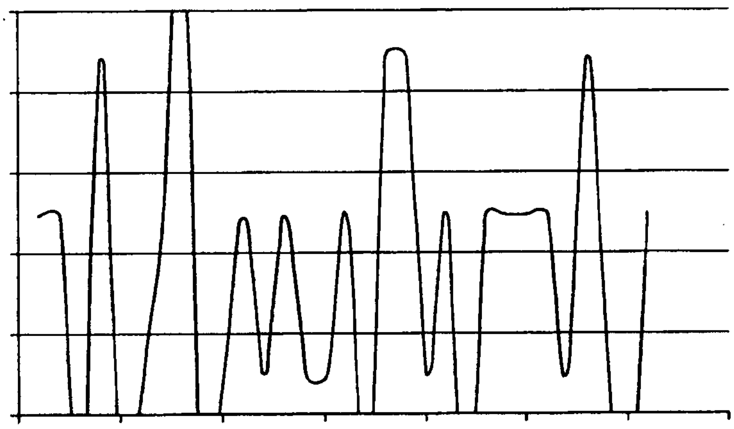

FIG.31

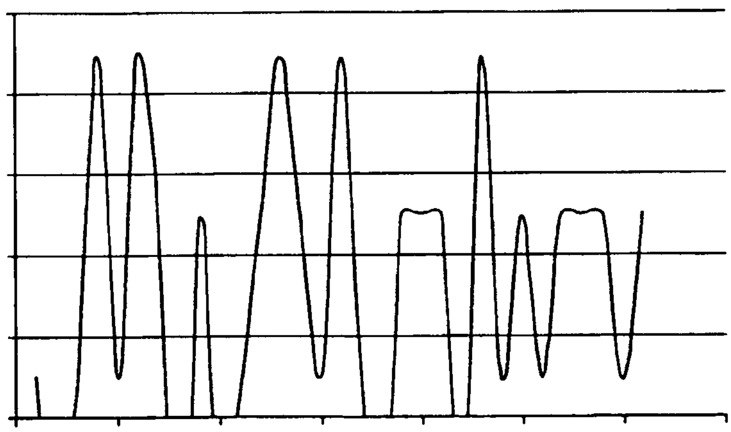

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005037658 A
- WO 02093579 A
- JP 2007168991 A


### Non-patent literature cited in the description


- **MARK G. KUZYK.** Fundamental limits on two-photon absorption cross sections. *Journal of Chemical Physics,* 2003, vol. 119, 8327